# FASCICULE DE BREVET EUROPEEN

(11) **EP 2 708 002 B1**
(45) Date de publication et mention de la délivrance du brevet: **01.03.2017**
(21) Numéro de dépôt: 12725067.8
(22) Date de dépôt: 27.04.2012
(51) Int. Cl.: H04L 12/66, H04L 29/06, H04W 36/00, H04L 12/54, H04W 36/14

(54) **PROCÉDÉ DE TRAITEMENT D'UNE REQUÊTE DE BASCULEMENT D'UNE COMMUNICATION ENTRE DEUX RÉSEAUX D'ACCÈS**
VERFAHREN ZUR BEHANDLUNG EIN UMSCHALTEN DER KOMMUNIKATION ZWISCHEN ZWEI ZUGANGSNETZE
METHOD FOR PROCESSING A REQUEST FOR SWITCHING A COMMUNICATION BETWEEN TWO ACCESS NETWORKS

(30) Priorité: 09.05.2011 FR 1153950
(43) Date de publication de la demande: 19.03.2014
(73) Titulaire: Orange, 75015 Paris (FR)
(72) Inventeur: LE ROUZIC, Jean-Claude, F-22560 Trebeurden (FR); DOREE, José, F-22300 Lannion (FR)
(74) Mandataire: Fontenelle, Sandrine
(86) Numéro de dépôt international: PCT/FR2012/050945
(87) Numéro de publication internationale: WO 2012/153033

(56) Documents cités:
- GB-A- 2 443 006
- US-A1- 2008 080 480
- US-A1- 2010 067 493

## Description

### Arrière-plan de l'invention

La présente invention se rapporte au domaine général des télécommunications.

Elle concerne plus particulièrement la gestion du basculement, entre deux réseaux d'accès connectés à un coeur de réseau, d'une communication (ou d'un appel au sens général du terme) établie par un terminal sur l'un des réseaux d'accès.

Par « communication », on entend ici tout échange de données multimédia établi entre deux terminaux et géré par le coeur de réseau, tel que par exemple un appel téléphonique ou une vidéoconférence. Au sens de l'invention, une communication est constituée d'une part, de la session média (i.e. flux média) transportant les données multimédia échangées, et d'autre part, de la signalisation de communication (i.e. signalisation d'appel) nécessaire à l'échange des données.

L'invention s'applique de façon privilégiée mais non limitative lorsque le coeur de réseau est un réseau IP reposant sur une architecture IMS (IP Multimedia Subsystem) et mettant en oeuvre un protocole de signalisation de type protocole d'initiation de session SIP (Session Initiation Protocol).

La plupart des opérateurs de télécommunications amorcent aujourd'hui la migration de leurs réseaux téléphoniques à commutation de circuits (CS pour Circuit Switched) vers des coeurs de réseaux IP à commutation de paquets (ou réseaux PS pour Packet Switched en anglais), comme par exemple des réseaux de voix sur IP.

Dans ces réseaux à commutation de paquets, un même terminal, lorsqu'il est multi-mode (et/ou multi-bande), peut être connecté et enregistré auprès du coeur de réseau IP par le biais de plusieurs accès, tels qu'un réseau d'accès 3G (Third Generation), un ensemble de lignes xDSL (x Digital Subscriber Line), un réseau EPC (Evolved Packet Core), un réseau WLAN (Wireless Local Access Network), un réseau WiMAX (Worldwide Interoperability for Microwave Access), etc.

Le terminal multi-mode offre la possibilité à son utilisateur de choisir un réseau parmi les différents réseaux d'accès compatibles avec le terminal pour établir une communication. Les critères de choix appliqués relèvent généralement de l'utilisateur ou de l'opérateur du coeur réseau IP : politique tarifaire de l'opérateur, qualité de la communication, bande passante disponible, etc.

Il permet également à son utilisateur de basculer en cours de communication d'un réseau d'accès (dit initial) à un autre réseau d'accès (dit cible) si par exemple, la qualité de transmission sur le réseau d'accès initial devient médiocre. On parle alors de basculement de la communication ou « handover » entre le réseau d'accès initial et le réseau d'accès cible, ou encore de mobilité PS-PS. Ce basculement peut concerner tout ou partie des flux média associés à la communication et/ou de la signalisation : on parle alors de transfert total ou partiel de la communication.

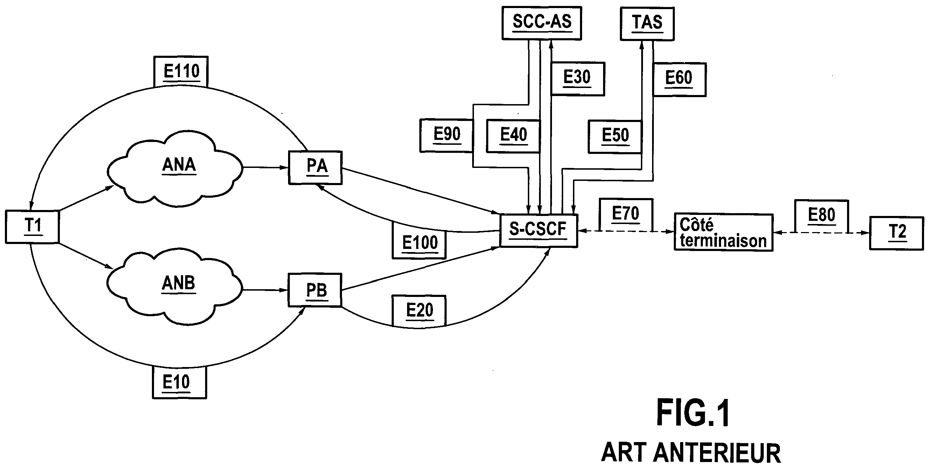

Afin de garantir une continuité du service lors du basculement de la communication et de rendre cette opération transparente pour l'utilisateur, des mécanismes ont été définis pour l'architecture IMS dans les documents 3GPP TS23.237 (« IP Multimedia Subsystem (IMS) Service Continuity ; Stage 2 ») et TS24.237 (« IP Multimedia Subsystem (IMS) Service Continuity ; Stage 3 »). Ces mécanismes de basculement reposent sur le déclenchement, dans le réseau IMS, d'un serveur d'application dédié ou serveur SCC-AS (Service Centralization and Continuity Application Server), apte à gérer la signalisation reçue du terminal lors du handover. La **figure 1** illustre schématiquement le fonctionnement d'un tel serveur.

Dans l'exemple envisagé sur la figure 1, le terminal T1 est un terminal bi-mode connecté et enregistré auprès d'un coeur de réseau IP sur deux réseaux d'accès à commutation de paquets, ANA et ANB. Le coeur de réseau IP a une architecture IMS, et s'appuie notamment sur les serveurs P-CSCF (Proxy-Call Session Control Function) PA et PB, sur un serveur S-CSCF (Serving-Call Session Control Function), sur un serveur d'application téléphonique TAS et sur un serveur d'application SCC-AS tel que défini dans les documents 3GPP TS23.237 et TS24.237.

On suppose que le terminal T1 a établi sur le réseau ANA une communication avec le terminal T2. Cette communication est ancrée au niveau du serveur SCC-AS avec les informations de session média correspondantes.

Conformément au document TS24.237, pour provoquer un basculement de cette communication du réseau d'accès ANA vers le réseau d'accès ANB, le terminal T1 émet sur le réseau ANB une requête INVITE contenant les informations de la session média associée à la communication sur ANB (i.e. caractéristiques des flux média réservés pour la communication sur ANB) (étape E10).

Cette requête INVITE répond à diverses contraintes imposées par la norme (et décrites par exemple dans les documents 3GPP TS24.229, IETF RFC 5627, IETF RFC 3891 et IETF RFC 4538), concernant notamment :
- le contenu de son identifiant URI (Uniform Resource Identifier) ; et
- la présence d'un entête « Replaces » ou « Target-Dialog » (défini dans les documents RFC 3891 et RFC 4538), contenant les références de la communication établie sur le réseau ANA.

La requête INVITE émise par T1 est classiquement relayée par le serveur PB vers le serveur S-CSCF (étape E20), puis routée par le serveur S-CSCF vers le serveur SCC-AS (étape E30).

Le serveur SCC-AS, grâce aux informations contenues dans l'entête « Replaces » ou « Target-Dialog », établit une corrélation entre la requête INVITE et la communication établie entre les terminaux T1 et T2 sur le réseau d'accès ANA. Il interprète alors la requête INVITE comme une requête de basculement de la communication du réseau ANA vers le réseau ANB, et met à jour les informations de session relatives à la communication avec les informations contenues dans la requête.

Puis il transmet une requête re-INVITE contenant ces informations à destination du terminal T2 (étapes E40-E80).

Dès lors, de nombreux échanges de signalisation sont mis en oeuvre par le serveur SCC-AS et par les terminaux T1 et T2 pour le basculement de la communication sur ANB, et notamment des flux média associés à cette communication (étapes E90-E110). L'ensemble de cette signalisation transite et est traitée par le serveur SCC-AS.

Ainsi, la solution de basculement proposée aujourd'hui dans le standard 3GPP est coûteuse et complexe tant au niveau du coeur de réseau IP que des terminaux.

Les terminaux, pour pouvoir mettre en oeuvre cette solution, doivent en effet être conformes à plusieurs normes concernant notamment la construction de la requête INVITE de basculement (ils doivent par exemple, pour être conformes à toutes les options normalisées, pouvoir inclure les deux entêtes « Replaces » et « Target-Dialog »).

Au niveau du coeur de réseau, cette solution requiert le déclenchement d'un serveur d'application SCC-AS dédié pour gérer la signalisation reçue des terminaux via des réseaux d'accès différents.

Or, il est connu que le déclenchement de plusieurs serveurs d'application, et *a fortiori* d'un serveur dédié pour la gestion d'un service, est coûteux en termes de ressources et de traitements pour le serveur S-CSCF. Ce déclenchement génère par ailleurs des échanges de signalisation importants dans le réseau, phénomène amplifié par les nombreux échanges nécessaires entre les terminaux et le serveur SCC-AS.

Le document US 2008/080480 décrit un procédé de gestion par un serveur d'application d'un coeur de réseau IMS de la continuité d'un appel dans un environnement réseau comprenant un réseau CS et un réseau PS.

### Objet et résumé de l'invention

L'invention propose notamment de remédier à ces inconvénients en confiant la gestion du basculement de la communication entre les deux réseaux d'accès (d'origine et cible) aux entités de raccordement de ces réseaux d'accès au coeur de réseau. Par entité de raccordement du réseau d'accès au coeur de réseau on entend ici le point d'entrée sur le coeur de réseau du terminal connecté au réseau d'accès. L'entité de raccordement au sens de l'invention d'une part, est connectée au plan de signalisation du réseau d'accès et du coeur de réseau, et d'autre part, commande le plan média du réseau d'accès et du coeur de réseau (i.e. plan relatif au transport, à l'accès et à la commutation de paquets), soit directement soit indirectement via des équipements intermédiaires. L'entité de raccordement au sens de l'invention peut donc être distribuée sur plusieurs équipements selon l'architecture du coeur de réseau envisagée.

Plus précisément, l'invention propose de créer un canal (logique ou physique) de communication entre les deux entités de raccordement, permettant un dialogue entre ces entités pour la récupération des informations nécessaires au basculement.

Ainsi, selon un premier aspect, l'invention vise un procédé de traitement d'une requête, mis en oeuvre par une première entité de raccordement d'un premier réseau d'accès à un coeur de réseau. Conformément à l'invention, ce procédé comporte :
- une étape de réception d'une requête de basculement vers le premier réseau d'accès d'une communication établie par un terminal sur un deuxième réseau d'accès, cette requête étant reçue du terminal sur le premier réseau d'accès et comprenant :
   o un identifiant de la communication ;
   o des informations relatives à une session média associée à la communication sur le premier réseau d'accès ; et
   o une information représentative d'au moins un traitement à appliquer sur une session média associée à la communication sur le deuxième réseau d'accès ;
- une étape d'identification, à partir de la requête de basculement, d'une deuxième entité de raccordement du deuxième réseau d'accès au coeur de réseau par laquelle transite la communication sur le deuxième réseau d'accès ;
- une étape de transmission de l'identifiant de la communication et de l'information représentative dudit au moins un traitement à la deuxième entité ainsi identifiée pour application dudit au moins un traitement ; et
- une étape de transfert, à destination du coeur de réseau, de la requête de basculement avec les informations relatives à la session média et un identifiant de la communication dans le coeur de réseau obtenu à l'aide de l'identifiant de la communication reçu du terminal.

Corrélativement, l'invention vise également une entité de raccordement d'un premier réseau d'accès à un coeur de réseau comportant :
- des moyens de réception d'une requête de basculement vers le premier réseau d'accès d'une communication établie par un terminal sur un deuxième réseau d'accès, cette requête étant reçue du terminal sur le premier réseau d'accès et comprenant :
   o un identifiant de la communication ;
   o des informations relatives à une session média associée à la communication sur le premier réseau d'accès ; et
   o une information représentative d'au moins un traitement à appliquer sur une session média associée à la communication sur le deuxième réseau d'accès ;
- des moyens d'identification, à partir de la requête de basculement, d'une deuxième entité de raccordement du deuxième réseau d'accès au coeur de réseau par laquelle transite la communication sur le deuxième réseau d'accès ;
- des moyens de transmission de l'identifiant de la communication et de l'information représentative dudit au moins un traitement à la deuxième entité ainsi identifiée pour application dudit au moins un traitement ; et
- des moyens de transfert, à destination du coeur de réseau, de la requête de basculement avec les informations relatives à la session média et un identifiant de la communication dans le coeur de réseau obtenu à l'aide de l'identifiant de la communication reçu du terminal.

Par souci de simplification dans la présente description, on utilisera le mot « transfert », que la requête de basculement soit modifiée ou non par l'entité de raccordement.

Pour un coeur de réseau s'appuyant sur une architecture IMS, les entités de raccordement pourront être notamment les serveurs P-CSCF qui relient les réseaux d'accès au coeur de réseau.

En variante, il pourra s'agir de serveurs de contrôle d'accès au coeur de réseau, aussi connus sous le nom de serveurs SBC (Session Border Control). De façon connue en soi, un serveur SBC est un élément de sécurité du réseau, placé entre le terminal et le serveur P-CSCF ou remplaçant le serveur P-CSCF, et qui autorise l'ouverture dynamique de flux média s'ils correspondent à des demandes annoncées au niveau signalisation.

Les serveurs P-CSCF comme les serveurs SBC sont connectés au plan de signalisation et commandent le plan média du coeur de réseau et du réseau d'accès. On notera que pour les serveurs P-CSCF, la commande du plan média peut être directe ou indirecte via des demandes envoyées à des équipements intermédiaires pilotant le plan média.

Bien entendu, l'invention s'applique également lorsqu'une même entité est en charge du raccordement du premier réseau d'accès et du deuxième réseau d'accès au coeur de réseau. Les moyens de transmission de l'identifiant de la communication et de l'information représentative du traitement à appliquer sur la session seront alors des moyens internes à l'entité de raccordement.

Ainsi l'invention, en confiant la gestion du basculement aux entités de raccordement des réseaux d'accès au coeur de réseau, permet avantageusement de s'affranchir du déclenchement d'un serveur d'application dédié dans le coeur de réseau, et de limiter la signalisation échangée nécessaire au basculement.

En effet, les entités de raccordement se trouvant à l'intersection des réseaux d'accès et du coeur de réseau, disposent d'une visibilité à la fois côté accès et côté coeur de réseau.

En outre, d'une part ces entités gèrent la signalisation dans le réseau (et peuvent donc modifier des éléments de signalisation telle que la requête de basculement si nécessaire), d'autre part elles sont responsables de la commande du plan média. Elles sont donc en possession de toutes les informations relatives à la communication établie nécessaires au basculement, et peuvent agir soit directement soit via des demandes explicites sur les flux média engagés dans la communication.

Par ailleurs, les éléments contenus dans la requête de basculement permettent à la première entité de raccordement d'identifier l'entité en charge des flux média de la communication à transférer, autrement dit, la deuxième entité de raccordement, et ce afin de l'informer du traitement à réaliser sur la session média (ex. libération partielle ou totale des flux média engagés sur le deuxième réseau d'accès). La communication « directe » entre les deux entités de raccordement permet de limiter la signalisation échangée sur le réseau pour libérer les flux média.

Ainsi par exemple, dans un mode de réalisation de l'invention, au cours de l'étape d'identification, la deuxième entité de raccordement est identifiée à l'aide d'un identifiant du terminal sur le deuxième réseau d'accès compris dans la requête de basculement. Cet identifiant pourra être avantageusement comparé aux informations obtenues dynamiquement par la première entité de raccordement lors de l'enregistrement du terminal auprès du coeur de réseau via le premier réseau d'accès, et qui comprennent notamment les adresses de contact du terminal sur le coeur de réseau. De façon connue de l'homme du métier, ces adresses de contact sont constituées des adresses IP des entités de raccordement enrichies par des informations contextuelles liées au terminal (ou à l'abonné).

En variante, dans un autre mode de réalisation, la deuxième entité de raccordement est identifiée par la première entité de raccordement en utilisant un identifiant de la deuxième entité sur le deuxième réseau d'accès (par exemple son adresse IP sur le deuxième réseau d'accès) compris dans la requête de basculement reçue du terminal. Le stockage au niveau de la première entité de raccordement d'une table statique établissant la correspondance, pour chaque entité de raccordement d'un réseau d'accès au coeur de réseau, entre identifiant de l'entité de raccordement sur son réseau d'accès et identifiant de l'entité de raccordement sur le coeur de réseau, permettra avantageusement à la première entité de raccordement d'identifier la deuxième entité de raccordement.

En outre, la première entité de raccordement modifie, si nécessaire, l'identifiant de la communication contenu dans la requête de basculement pour insérer un identifiant de la communication dans le coeur de réseau, tel que par exemple des identifiants d'un dialogue associé à la communication dans le coeur de réseau. De cette sorte, la requête de basculement transférée au coeur de réseau par la première entité fait référence à une communication connue dans le coeur de réseau, ce qui permet un traitement de cette requête par les entités traversées dans le coeur de réseau comme une requête classique de renégociation des flux média dans le coeur de réseau.

On comprend bien ainsi que la logique de service et la signalisation nécessaires à la gestion du basculement sont simplifiées grâce à l'invention. Le temps de réponse à la requête de basculement du terminal est en outre réduit et la mise en oeuvre de l'invention au niveau du terminal est très simple.

On notera que l'invention permet avantageusement un basculement total de la signalisation associée à la communication du deuxième réseau d'accès vers le premier réseau d'accès (le basculement de la session média peut quant à lui être partiel ou total en fonction des informations de session contenues dans la requête). En effet, une fois la requête de basculement envoyée par le terminal sur le premier réseau d'accès, les entités de raccordement étant capables de gérer seules les flux média, il est donc inutile que le terminal continue à échanger de la signalisation sur les deux réseaux d'accès. Autrement dit, peu importe ce qui se passe sur sa connexion avec le deuxième réseau d'accès (ex. lien radio en échec, etc.), le terminal peut dès lors n'émettre des messages de signalisation en relation avec la communication que sur le premier réseau d'accès. Au contraire dans les mécanismes de basculement proposés dans le standard 3GPP, la signalisation peut être maintenue sur les deux réseaux d'accès, notamment en cas de basculement partiel de la session média associée à la communication.

De plus, dans un coeur de réseau connecté à plusieurs réseaux d'accès par l'intermédiaire d'entités de raccordement conformes à l'invention, on dispose d'une gestion distribuée du basculement des communications sur l'ensemble des entités de raccordement. Ainsi, si une panne affecte l'une des entités de raccordement, le basculement des communications par les autres entités de raccordement du coeur de réseau reste possible (soit vers le même réseau d'accès si le coeur de réseau est doté de plusieurs entités de raccordement au même réseau d'accès, soit vers d'autres réseaux d'accès si le terminal comprend d'autres interfaces d'accès). La solution proposée par l'invention est donc plus robuste qu'en cas de gestion centralisée du basculement par un unique serveur d'application SCC-AS.

Dans un mode particulier de réalisation de l'invention, la requête de basculement reçue du terminal comprend en outre des informations relatives à la session média associée à la communication sur le deuxième réseau d'accès, ces informations étant au moins partiellement transmises avec l'identifiant de la communication et l'information représentative dudit au moins un traitement à la deuxième entité.

Ces informations viennent avantageusement compléter l'information représentative du ou des traitements à appliquer sur la session média associée à la communication sur le deuxième réseau d'accès contenue dans la requête de basculement. Il peut s'agir notamment de la description des flux média spécifiques sur lesquels appliquer le traitement, autrement dit, lorsque le traitement à appliquer est par exemple une libération partielle des ressources, de la description des flux média spécifiques concernés par la libération.

Dans un mode préféré de réalisation de l'invention :
- l'information représentative du ou des traitements à appliquer sur la session média associée à la communication sur le deuxième réseau d'accès sera contenue dans un entête de la requête de basculement ; et
- les informations relatives à la session média associée à la communication sur le deuxième réseau d'accès seront contenues dans une offre SDP (Session Description Protocol) de la requête de basculement.

Ainsi, la deuxième entité de basculement identifiant dans l'entête de la requête de basculement un traitement particulier tel qu'une libération partielle des ressources, pourra, dans ce mode de réalisation, consulter l'offre SDP contenue dans la requête de basculement pour obtenir des informations complémentaires concernant ce traitement.

Dans un mode particulier de réalisation de l'invention, l'identifiant de la communication dans le coeur de réseau est obtenu auprès de la deuxième entité (à l'aide de l'identifiant de la communication reçu du terminal).

Ce mode de réalisation de l'invention s'applique de façon privilégiée mais non limitative à des réseaux mettant en oeuvre le protocole SIP et pour lesquels les entités de raccordement (typiquement les serveurs P-CSCF ou SBC) se comportent comme des « agents dos à dos » ou « back-to-back user agents ».

De façon connue, un « back-to-back user agent » incorpore à la fois la fonction d'agent émetteur d'appels et la fonction d'agent récepteur d'appels, par opposition à une entité de raccordement en mode proxy qui agit seulement comme un routeur SIP. Ainsi, l'utilisation d'une entité de raccordement de type « back-to-back user agent » a pour conséquence que les identifiants de la communication de part et d'autre de cette entité (c'est-à-dire côté réseau d'accès et côté coeur de réseau) ne sont pas identiques. Autrement dit, l'identifiant de la communication connu du terminal et reçu dans la requête de basculement ne correspond pas à l'identifiant de la communication utilisé sur le coeur de réseau.

En revanche, l'identifiant de la communication utilisé sur le coeur de réseau est connu de la deuxième entité de raccordement par laquelle la communication a été établie sur le deuxième réseau. Il est associé au niveau de l'entité de raccordement à un identifiant de la communication sur le deuxième réseau d'accès, qui, lui, est connu du terminal et envoyé dans la requête de basculement. L'invention propose donc de récupérer l'identifiant de la communication sur le coeur de réseau auprès de la deuxième entité en utilisant l'identifiant de la communication contenu dans la requête reçue du terminal.

On notera que la solution proposée actuellement dans le standard 3GPP et décrite précédemment en référence à la figure 1 ne permet pas de gérer un tel cas de figure. Elle repose en effet sur une identité des identifiants de la communication tout au long du chemin d'appel.

Bien entendu, l'invention permet également de gérer le basculement de la communication lorsqu'il y a identité des identifiants. Dans ce cas, l'identifiant de la communication sur le coeur de réseau est l'identifiant de la communication reçu du terminal.

Ainsi l'invention est remarquable en ce qu'elle peut être appliquée à différentes configurations du coeur de réseau : entités de raccordement en mode proxy ou back-to-back user agent, mêmes entités de raccordement pour les deux accès ou entités distinctes, etc.

Dans un mode particulier de réalisation, le procédé de traitement comporte en outre :
- une étape d'obtention, auprès de la deuxième entité et à l'aide de l'identifiant de la communication reçu du terminal, d'informations contextuelles relatives à la communication contenant l'identifiant de la communication dans le coeur de réseau ; et
- une étape d'insertion desdites informations contextuelles dans la requête de basculement avant son transfert à destination du coeur de réseau.

Au sens de l'invention, on entend par informations contextuelles tout type d'informations relatives à l'établissement de la communication. Ceci inclut bien entendu les informations relatives au contexte de communication en cours (aussi connu sous le nom de « contexte d'appel »), telles que par exemple, pour un réseau SIP, les identifiants de dialogue, les identités des entités à traverser dans le coeur de réseau (aussi connues sous le nom de « routeset »), ou de manière plus générale les informations se trouvant dans l'état de dialogue ou « dialogue state » décrit dans le document IETF RFC3261. Mais il peut également s'agir d'informations relatives au contexte d'enregistrement de l'utilisateur sur l'entité de raccordement,

aux contextes de souscription en cours, etc. Plus généralement, l'expression « information contextuelle » pourra désigner au sens de l'invention toute information nécessaire à la modification de la communication en cours par la première entité de raccordement, et qui est présente ou stockée sur la deuxième entité de raccordement.

Dans un mode de réalisation de l'invention :
- le coeur de réseau est un réseau IP mettant en oeuvre le protocole SIP ;
- la requête de basculement reçue du terminal est une requête d'établissement d'appel INVITE ; et
- l'information représentative dudit au moins un traitement est contenue dans un entête prédéfini de la requête de basculement reçue du terminal.

Ce mode de réalisation permet une mise en oeuvre très simple de l'invention : la requête de basculement se distingue d'une requête classique d'établissement d'appel par la simple présence d'un nouvel entête prédéfini contenant les informations requises pour la gestion du basculement selon l'invention. Cet entête pour être interprété en tant que tel par la première entité de raccordement selon l'invention, devra bien entendu faire l'objet d'une déclaration appropriée auprès de l'IANA (Internet Assigned Number Authority).

Il peut également contenir, dans un mode particulier de réalisation, un identifiant de la deuxième entité de raccordement du deuxième réseau d'accès au coeur de réseau et/ou un identifiant du terminal sur le deuxième réseau d'accès.

Dans un autre mode de réalisation, l'identifiant de la communication et l'information représentative dudit au moins un traitement sont transmises via un canal physique préétabli entre la première entité et la deuxième entité, les informations contextuelles étant obtenues via ce canal.

Le canal de dialogue entre les deux entités de raccordement est, dans ce mode de réalisation, un canal physique établi par construction réseau de façon permanente, préalablement à toute demande de basculement.

En variante, le canal de dialogue établi entre la première entité de raccordement et la deuxième entité de raccordement peut être un canal logique éphémère, établi pour chaque requête de basculement reçue d'un terminal.

Diverses entités coopèrent au basculement de la communication entre les premier et deuxième réseaux d'accès selon l'invention : l'entité de raccordement du premier réseau d'accès au coeur de réseau, mais également l'entité de raccordement du deuxième réseau d'accès au coeur de réseau ainsi que le terminal requérant le basculement de la communication.

Ainsi, selon un deuxième aspect, l'invention vise également un procédé de traitement d'une session média comportant :
- une étape de réception d'une requête en provenance d'une première entité de raccordement d'un premier réseau d'accès à un coeur de réseau, ladite première entité étant en charge du basculement vers le premier réseau d'accès d'une communication établie par un terminal sur un deuxième réseau d'accès, cette requête comprenant :
   o un identifiant de la communication ; et
   o une information représentative d'au moins un traitement à appliquer sur une session média relative à cette communication ; et
- une étape d'application dudit au moins un traitement sur la session média,
   ce procédé de traitement étant mis en oeuvre par une deuxième entité de raccordement du deuxième réseau d'accès au coeur de réseau par laquelle transite la communication.

Corrélativement, l'invention vise également une entité comportant :
- des moyens de réception d'une requête en provenance d'une première entité de raccordement d'un premier réseau d'accès à un coeur de réseau, ladite première entité étant en charge du basculement vers le premier réseau d'accès d'une communication établie par un terminal sur un deuxième réseau d'accès, ce message comprenant :
   o un identifiant de la communication ; et
   o une information représentative d'au moins un traitement à appliquer sur une session média relative à cette communication ; et
- des moyens d'application dudit au moins un traitement sur la session média,
   cette entité étant une entité de raccordement du deuxième réseau d'accès au coeur de réseau par laquelle transite la communication.

La libération totale ou partielle des ressources engagées dans la communication sur le deuxième réseau est ainsi réalisée par la deuxième entité de raccordement, sur réception d'une requête de la première entité de raccordement en charge du basculement de la communication.

Selon un troisième aspect, l'invention vise également un procédé d'émission d'une requête par un terminal sur un premier réseau d'accès connecté à un coeur de réseau par l'intermédiaire d'une première entité de raccordement, cette requête étant une requête de basculement vers le premier réseau d'accès d'une communication établie par le terminal sur un deuxième réseau d'accès. Conformément à l'invention, la requête de basculement comprend :
- un identifiant de la communication ;
- des informations relatives à une session média associée à la communication sur le premier réseau d'accès ; et
- une information représentative d'au moins un traitement à appliquer sur une session média associée à la communication sur le deuxième réseau d'accès.

Corrélativement, l'invention vise également un terminal multi-mode, apte à communiquer sur un premier et un deuxième réseau d'accès connectés à un coeur de réseau, ce terminal comprenant :
- des moyens d'établissement d'une communication, sur le deuxième réseau d'accès ; et
- des moyens d'émission, sur le premier réseau d'accès, d'une requête de basculement de cette communication vers le premier réseau d'accès, cette requête comprenant :
   ∘ un identifiant de la communication;
   o des informations relatives à une session média associée à la communication sur le premier réseau d'accès ; et
   o une information représentative d'au moins un traitement à appliquer sur une session média associée à la communication sur le deuxième réseau d'accès.

L'invention est simple à mettre en oeuvre au niveau du terminal, les éléments insérés dans la requête de basculement étant connus du terminal. Ces éléments permettent à l'entité de raccordement d'interpréter la requête comme une requête de basculement d'une communication établie sur le deuxième réseau et d'identifier l'entité de raccordement vers laquelle transférer l'information de traitement des ressources engagées sur le deuxième réseau.

Selon un quatrième aspect, l'invention vise également un système de communications comprenant :
- un terminal multi-mode conforme à l'invention, apte à communiquer sur un premier réseau d'accès et sur un deuxième réseau d'accès et à émettre une requête de basculement vers le premier réseau d'accès d'une communication établie sur le deuxième réseau d'accès ;
- une première entité de raccordement du premier réseau d'accès à un coeur de réseau, conforme à l'invention et apte à traiter ladite requête de basculement ; et
- une deuxième entité de raccordement du deuxième réseau d'accès au coeur de réseau par laquelle transite la communication sur le deuxième réseau d'accès, cette deuxième entité étant conforme à l'invention et apte à appliquer au moins un traitement sur une session média associée à cette communication.

Le système de communications selon l'invention dispose des mêmes avantages que l'entité de raccordement, cités précédemment.

Selon un cinquième aspect, l'invention vise aussi un signal émis par un terminal sur un premier réseau d'accès connecté à un coeur de réseau, ce signal transportant une requête de basculement vers le premier réseau d'accès d'une communication établie par le terminal sur un deuxième réseau d'accès. Conformément à l'invention, le signal est remarquable en ce que la requête de basculement comprend :
- un identifiant de la communication ;
- des informations relatives à une session média associée à la communication sur le premier réseau d'accès ; et
- une information représentative d'au moins un traitement à appliquer sur une session média associée à la communication sur le deuxième réseau d'accès.

Dans un mode particulier de réalisation, les différentes étapes du procédé de traitement d'une requête, du procédé de traitement d'une session média et du procédé d'émission d'une requête sont déterminées par des instructions de programmes d'ordinateurs.

En conséquence, l'invention vise aussi un programme d'ordinateur sur un support d'informations, ce programme étant susceptible d'être mis en oeuvre dans une entité de raccordement d'un réseau d'accès à un coeur de réseau ou plus généralement dans un ordinateur, ce programme comportant des instructions adaptées à la mise en oeuvre des étapes d'un procédé de traitement d'une requête tel que décrit ci-dessus.

L'invention vise également un programme d'ordinateur sur un support d'informations, ce programme étant susceptible d'être mis en oeuvre dans une entité de raccordement d'un réseau d'accès à un coeur de réseau ou plus généralement dans un ordinateur, ce programme comportant des instructions adaptées à la mise en oeuvre des étapes d'un procédé de traitement d'une session média tel que décrit ci-dessus.

L'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé d'émission d'une requête tel que décrit ci-dessus.

Ces programmes peuvent utiliser n'importe quel langage de programmation, et être sous la forme de codes source, codes objet, ou de codes intermédiaires entre code source et code objet, tels que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de traitement d'une requête, le procédé de traitement d'une session média, le procédé d'émission d'une requête, les entités de raccordement, le terminal, le système de communications et le signal selon l'invention présentent en combinaison tout ou partie des caractéristiques précitées.

### Brève description des dessins

D'autres caractéristiques et avantages de la présente invention ressortiront de la description faite ci-dessous, en référence aux dessins et aux annexes qui en illustrent un exemple de réalisation dépourvu de tout caractère limitatif.

Sur les figures :
- la figure 1, déjà décrite, représente de façon schématique le fonctionnement d'un serveur d'application dédié au basculement de session entre divers réseaux d'accès, tel que décrit dans le document 3GPP TS24.237 de l'art antérieur ;
- la figure 2 représente, dans son environnement, un système de communications conforme à l'invention dans un mode particulier de réalisation ;
- les figures 3A et 3B représentent schématiquement l'architecture matérielle d'entités de raccordement conformes à l'invention, et appartenant au système de communications représenté sur la figure 2 ;
- la figure 4 représente schématiquement l'architecture matérielle d'un terminal conforme à l'invention, et appartenant au système de communications représenté sur la figure 2 ; et
- la figure 5 représente, de façon schématique, les principales étapes mises en oeuvre conformément à l'invention lors du basculement, entre les réseaux d'accès ANA et ANB, d'une session associée à une communication établie par le terminal UE1 de la figure 2.

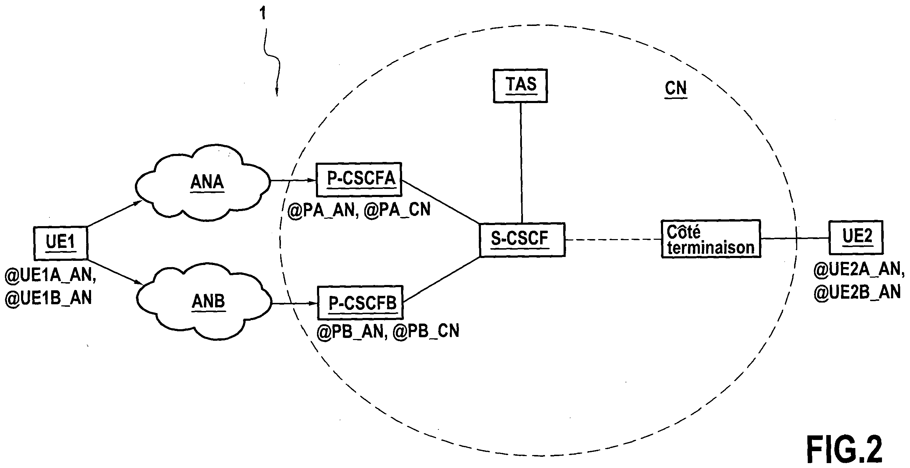

Dans les annexes :
- l'annexe 1 illustre un exemple de requête de basculement pouvant être émise par le terminal UE1 représenté sur la figure 2 et pouvant être portée par un signal conforme à l'invention dans un mode particulier de réalisation ;
- l'annexe 2 donne un exemple de requête pouvant être envoyée par l'entité de raccordement P-CSCFB à l'entité de raccordement P-CSCFA de la figure 2, sur réception de la requête de basculement du terminal ;
- l'annexe 3 donne un exemple de message pouvant être envoyé par l'entité de raccordement P-CSCFA à l'entité de raccordement P-CSCFB de la figure 2, en réponse à la requête décrite en annexe 2 ; et
- l'annexe 4 donne un exemple de requête de basculement pouvant être transférée par l'entité de raccordement P-CSCFB à destination du coeur de réseau CN de la figure 2, suite à la réception de la requête de basculement décrite en annexe 1 et du message de réponse décrit en annexe 3.

### Description détaillée d'un mode de réalisation

La **figure 2** représente, dans son environnement, un système de communications 1 conforme à l'invention, dans un mode particulier de réalisation.

Dans ce mode de réalisation, le système de communications 1 est apte à gérer le basculement, vers un réseau d'accès ANB, d'une communication établie par un terminal UE1 sur un réseau d'accès ANA, avec un terminal UE2.

Les réseaux d'accès ANA et ANB sont ici des réseaux à commutation de paquets, tels que par exemple des réseaux d'accès 3G, xDSL, EPC, WLAN, WiMax, CDMA2000, etc. Ils sont connectés à un coeur de réseau CN.

Dans l'exemple envisagé ici, le coeur de réseau CN est un réseau de voix sur IP incorporant une architecture IMS et mettant en oeuvre, pour la signalisation échangée dans le réseau, le protocole d'initiation de session SIP. Les caractéristiques de l'architecture IMS et le protocole SIP sont définies respectivement au niveau des standards 3GPP et de IETF, notamment dans les documents 3GPP TS 22.228 « Service requirements for the IP Multimedia Core Network Subsystem (Stage 1) » et IETF RFC 3261 « Session Initiation Protocol ». Ils ne seront de ce fait pas décrits en détail ici.

Ces hypothèses concernant le coeur de réseau ne sont toutefois pas limitatives. Ainsi, des coeurs de réseau s'appuyant sur d'autres protocoles de transport que le protocole IP, de même que d'autres architectures de réseau (ex. une architecture H323 s'appuyant sur des entités de raccordement des réseaux d'accès connues sous le nom de « Gatekeeper » commandant à la fois le plan média et le plan de signalisation) ou d'autres protocoles de signalisation (ex. un protocole de signalisation propriétaire) peuvent être envisagés dans le cadre de l'invention.

De façon connue, le coeur de réseau CN comprend plusieurs entités fonctionnelles, dont notamment :
- une entité CSCF (Call Session Control Function) ; et
- plusieurs serveurs d'applications (Application Servers) hébergeant et fournissant des services, comme par exemple un serveur TAS d'application téléphonique gérant les communications côté appelant (renvoi d'appel, mise au secret, etc.).

L'entité CSCF est elle-même composée de plusieurs serveurs, parmi lesquels un serveur S-CSCF (Serving Call Session Control Function) en charge notamment de l'enregistrement des terminaux sur le coeur de réseau CN, et un ou plusieurs serveurs P-CSCF (Proxy Call Session Control Function), points de contact des terminaux avec le coeur de réseau.

Dans l'architecture envisagée ici, le coeur de réseau CN s'appuie sur un serveur P-CSCF distinct pour chaque réseau d'accès auquel il est raccordé : ainsi, le serveur P-CSCFA permet de raccorder le réseau d'accès ANA au coeur de réseau CN, et le serveur P-CSCFB permet de raccorder le réseau d'accès ANB au coeur de réseau CN. Le serveur P-CSCFA, respectivement le serveur P-CSCFB, est ainsi une entité de raccordement du réseau d'accès ANA, respectivement ANB, au coeur de réseau CN.

En outre, chaque serveur P-CSCF fonctionne ici en mode « back-to-back user agent ». Deux identifiants distincts (i.e. ici deux adresses IP distinctes) sont attribués à chaque serveur P-CSCF représenté sur la figure 2 :
- une adresse IP identifiant le serveur sur le réseau d'accès auquel il est raccordé : le serveur P-CSCFA est ainsi identifié par l'adresse @PA_AN sur le réseau d'accès ANA tandis que le serveur P-CSCFB est identifié par l'adresse @PB_AN sur le réseau d'accès ANB ; et
- une adresse IP identifiant le serveur sur le coeur de réseau CN : les serveurs P-CSCFA et P-CSCFB sont ainsi identifiés par les adresses @PA_CN et @PB_CN respectivement sur le coeur de réseau CN.

Ces hypothèses ne sont cependant pas limitatives : l'invention s'applique également lorsque les serveurs P-CSCFA et P-CSCFB fonctionnent en mode proxy, ou lorsqu'un seul serveur P-CSCF est en charge du raccordement des réseaux d'accès ANA et ANB, ce serveur pouvant se comporter en « back-to-back user agent » ou en proxy. L'homme du métier saura aisément adapter la description ci-après à l'une et/ou l'autre de ces configurations.

L'invention divulgue ainsi deux fonctions ou dispositifs complémentaires, appelés P-CSCFA et P-CSCFB, associés à un basculement (il est bien évident qu'un appareil donné dans une architecture réelle pourra éventuellement contenir les deux types de dispositifs, c'est-à-dire être capable de mettre en oeuvre les deux fonctions).

Par définition, les entités de raccordement P-CSCFA et P-CSCFB sont aptes à gérer la signalisation échangée sur le réseau (le terme réseau désigne ici à la fois le réseau d'accès et le coeur de réseau IP), et en particulier ici la signalisation SIP : elles sont donc capables de modifier des éléments de signalisation si nécessaire et notamment le contenu de requêtes SIP ou leurs entêtes. En outre, elles sont responsables de la commande du plan média du réseau soit directement soit indirectement via des demandes envoyées à des équipements intermédiaires agissant sur le plan média.

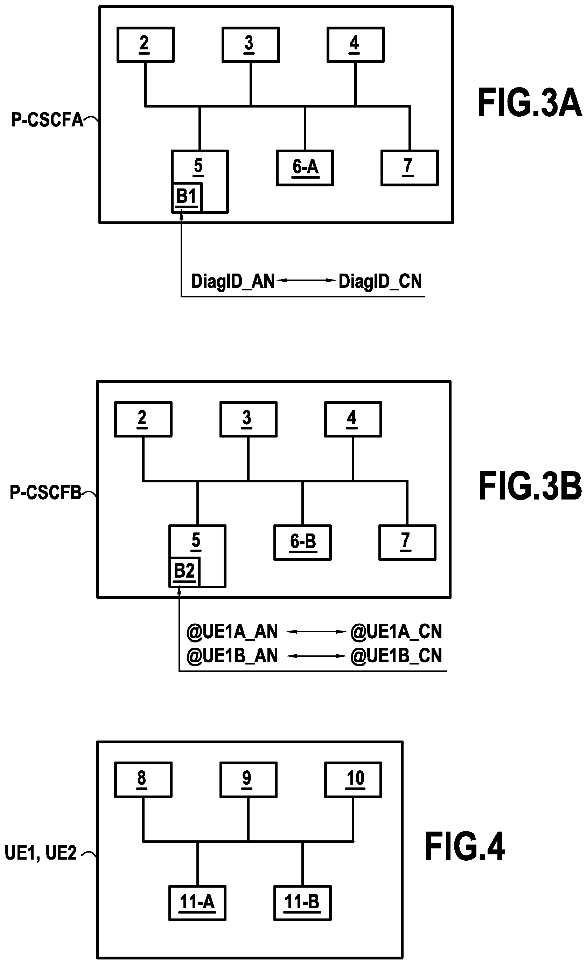

Les entités de raccordement P-CSCFA et P-CSCFB ont ici l'architecture matérielle d'un ordinateur, telle que représentée schématiquement sur les **figures 3A et 3B** respectivement. Chaque entité de raccordement comporte notamment un processeur 2, une mémoire vive 3, une mémoire morte 4, une mémoire non volatile 5, des moyens de communication 6 sur le réseau d'accès auquel elle est raccordée (i.e. moyens de communications 6-A sur ANA pour l'entité P-CSCFA, respectivement 6-B sur ANB pour l'entité P-CSCFB), et des moyens de communication 7 sur le coeur de réseau IP. Dans l'exemple envisagé ici, les moyens de communication 6-A, 6-B et 7 mettent en oeuvre également le protocole SIP.

La mémoire morte 4 des entités de raccordement P-CSCFA et P-CSCFB constitue un support d'enregistrement conforme à l'invention, lisible par le processeur 2 et sur lequel sont enregistrés des programmes d'ordinateur conformes à l'invention, comportant des instructions pour l'exécution des étapes d'un procédé de traitement d'une requête et d'un procédé de traitement d'une session média selon l'invention décrites ultérieurement.

Le terminal mobile UE1 est un terminal bi-mode conforme à l'invention, apte à communiquer sur les réseaux d'accès ANA et ANB sur lesquels il est identifié respectivement par les adresses IP @UE1A_AN et @UE1B_AN.

Le terminal UE1 dispose ici de l'architecture matérielle d'un ordinateur, telle que représentée schématiquement sur la **figure 4****.** Il comporte notamment un processeur 8, une mémoire vive 9, une mémoire morte 10, des moyens de communication 11-A sur le réseau d'accès ANA et des moyens de communications 11-B sur le réseau d'accès ANB. Dans l'exemple envisagé ici, les moyens de communication 11-A et 11-B mettent en oeuvre également le protocole SIP.

La mémoire morte 10 du terminal UE1 constitue un support d'enregistrement conforme à l'invention, lisible par le processeur 8 et sur lequel est enregistré un programme d'ordinateur conforme à l'invention, comportant des instructions pour l'exécution des étapes d'un procédé d'émission d'une requête selon l'invention décrites ultérieurement.

Le terminal UE2 peut être un terminal quelconque. Dans le mode de réalisation décrit ici, il s'agit également d'un terminal bi-mode conforme à l'invention, apte à communiquer sur les réseaux ANA et ANB sur lesquels il est identifié respectivement par les adresses IP @UE2A-AN et @UE2B_AN.

On notera que l'invention portant sur le basculement d'une communication entre deux réseaux d'accès, on se limite ici à des terminaux bi-modes communiquant sur ces deux réseaux. Toutefois, bien entendu, l'invention s'applique également à des terminaux multi-modes capables de communiquer sur plus de deux réseaux d'accès.

Par ailleurs, dans l'exemple décrit ici, il n'est pas nécessaire, pour mettre en oeuvre l'invention que le terminal UE2 soit conforme à l'invention, celui-ci n'étant pas à l'origine de la requête de basculement.

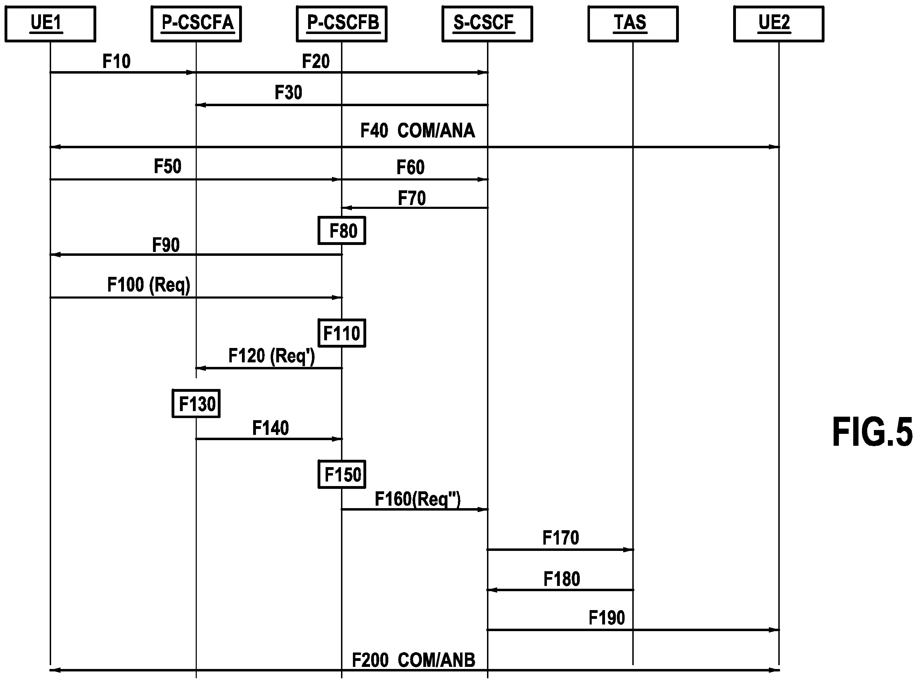

Nous allons maintenant décrire, en référence à la **figure 5** et aux **annexes 1-4,** les principales étapes d'un procédé de traitement d'une requête de basculement, d'un procédé de traitement d'une session média et d'un procédé d'émission d'une requête de basculement conformes à l'invention, dans un mode particulier de réalisation dans lequel ils sont mis en oeuvre respectivement par les entités de raccordement P-CSCFA, P-CSCFB, et par le terminal UE1.

Dans cet exemple, on envisage la gestion du basculement vers le réseau d'accès ANB (réseau cible et premier réseau au sens de l'invention) d'une communication établie par le terminal UE1 avec le terminal UE2 sur le réseau d'accès ANA (réseau d'origine et deuxième réseau au sens de l'invention).

On suppose que le terminal UE1 s'est préalablement enregistré auprès du coeur de réseau CN sur le réseau d'accès ANA de façon connue en soi, en envoyant sur le réseau ANA une requête d'enregistrement SIP REGISTER à destination du coeur de réseau CN. Cette requête d'enregistrement contient notamment l'adresse IP @UE1A_AN du terminal UE1 sur le réseau d'accès ANA.

De façon connue en soi, la requête d'enregistrement transite par l'entité de raccordement P-CSCFA (étape F10), qui génère une adresse de contact @UE1A_CN sur le coeur de réseau associée à l'adresse IP @UE1A_AN du terminal UE1. Cette adresse de contact @UE1A_CN correspond à l'adresse IP @PA_CN de l'entité P-CSCFA sur le coeur de réseau CN enrichie d'une information contextuelle relative au terminal UE1.

L'entité de raccordement P-CSCFA transfère la requête d'enregistrement et l'adresse de contact @UE1A_CN du terminal UE1 au serveur S-CSCF (étape F20). Dans le mode de réalisation décrit ici, l'entité de raccordement P-CSCFA transmet également au serveur S-CSCF, dans un paramètre spécifique de la requête d'enregistrement, l'adresse IP @UE1A_AN du terminal UE1 sur le réseau d'accès ANA.

En réponse à cette requête, le serveur S-CSCF transmet au terminal UE1, via l'entité de raccordement P-CSCFA, une durée de validité pour l'enregistrement. En outre, si le terminal UE1 est connecté à plusieurs réseaux d'accès et est enregistré via ces réseaux d'accès auprès du serveur S-CSCF, celui-ci transmet également au serveur P-CSCFA les adresses de contact associées au terminal UE1 connues du coeur de réseau CN (étape F30) ainsi que les adresses IP correspondantes du terminal UE1 sur les réseaux d'accès reçues des serveurs P-CSCF lors des enregistrements successifs via ces réseaux d'accès. Une fois enregistré auprès du coeur de réseau CN sur le réseau d'accès ANA, le terminal UE1 établit une communication COM/ANA avec le terminal UE2 sur ce réseau en vue d'échanger des données multimédia (étape F40).

De façon connue, pour établir cette communication, le terminal UE1 envoie une requête SIP d'établissement d'appel INVITE au terminal UE2 sur le réseau d'accès ANA, contenant les caractéristiques de la session média SMA désirées par le terminal UE1 pour cette communication. Par session média, on entend ici un ou plusieurs flux média (i.e. flux audio, vidéo, etc.), chaque flux média étant identifié par une adresse de connexion ainsi que ses descriptions média associées (ex. codec).

Cette requête est routée vers le serveur d'application TAS en charge de la gestion des communications pour le terminal UE1.

En outre, un canal de communication logique est mis en place pour véhiculer la signalisation associée à la communication COM/ANA. Le serveur P-CSCFA étant configuré en mode « back-to-back user agent », ce canal de communication est scindé en deux sous-canaux ou dialogues SIP. Ainsi, deux dialogues SIP sont créés de part et d'autre du serveur P-CSCFA :
- un dialogue entre le terminal UE1 et le serveur P-CSCFA ; et
- un dialogue entre le serveur P-CSCFA et le serveur d'application téléphonique TAS.

Chaque dialogue est identifié de manière unique par des identifiants de dialogue (ou dialog ID) comprenant, selon le document IETF RFC3261, un identifiant de la communication (Call-ID), un identifiant de l'origine (From tag) et un identifiant du destinataire (To tag) de la communication (ou du message). On notera par la suite DiagID_AN les identifiants du dialogue établi sur le réseau ANA entre le terminal UE1 et le serveur P-CSCFA pour la communication COM/ANA, et DiagID_CN les identifiants du dialogue établi sur le coeur de réseau CN entre le serveur P-CSCFA et le serveur d'application TAS pour la communication COM/ANA.

La correspondance entre les identifiants de dialogue DiagID_AN et DiagID_CN est mémorisée dans une base B1 de la mémoire non volatile 5 du serveur P-CSCFA. Ces identifiants de dialogue permettent respectivement d'identifier la communication dans le réseau d'accès ANA et dans le coeur de réseau CN. Il s'agit d'identifiants de la communication COM/ANA au sens de l'invention.

On notera que lorsque le serveur P-CSCFA fonctionne en mode proxy, un seul dialogue est établi pour la communication COM/ANA, de sorte que les identifiants de dialogue DiagID_AN et DiagID_CN sont identiques. Autrement dit, la communication est identifiée par le même identifiant dans le réseau d'accès ANA et dans le coeur de réseau CN.

Les autres étapes nécessaires à l'établissement de la communication COM/ANA étant connues de l'homme du métier, elles ne seront pas décrites plus en détail ici.

On suppose maintenant que le terminal UE1 souhaite provoquer un basculement de la communication COM/ANA vers le réseau ANB. On notera que ce basculement peut être indifféremment à l'initiative de l'utilisateur du terminal UE1 (par exemple via l'appui d'un bouton prédéfini sur le terminal UE1 ou via un menu présenté sur un écran du terminal UE1), du terminal lui-même (qui par exemple détecte une qualité médiocre du lien radio sur le réseau ANA) ou encore de l'opérateur.

Pour ce faire, préalablement à la demande de basculement, le terminal UE1 s'enregistre auprès du coeur de réseau CN sur le réseau d'accès ANB, de façon similaire à son enregistrement sur le réseau d'accès ANA décrit précédemment.

Ainsi, une requête d'enregistrement SIP REGISTER est émise par le terminal UE1 sur le réseau ANB à destination du coeur de réseau CN : elle contient notamment l'adresse IP @UE1B_AN du terminal UE1 sur le réseau ANB.

Cette requête d'enregistrement transite par l'entité de raccordement P-CSCFB (étape F50), qui génère une adresse de contact @UE1B_CN associée à l'adresse IP @UE1B_AN du terminal UE1 sur le réseau d'accès ANB. Cette adresse de contact @UE1B_CN correspond à l'adresse IP @PB_CN de l'entité de raccordement P-CSCFB sur le coeur de réseau CN enrichie d'une information contextuelle relative au terminal UE1.

L'entité de raccordement P-CSCFB transfère la requête d'enregistrement et l'adresse de contact @UE1B_CN du terminal UE1 au serveur S-CSCF (étape F60). Dans le mode de réalisation décrit ici, l'entité de raccordement P-CSCFB transmet également au serveur S-CSCF, dans un paramètre spécifique de la requête d'enregistrement, l'adresse IP @UE1B_AN du terminal UE1 sur le réseau d'accès ANB.

En réponse à cette requête, le serveur S-CSCF transmet au terminal UE1, via l'entité de raccordement P-CSCFB, une durée de validité pour l'enregistrement (étapes F70-F90).

En outre, le terminal UE1 étant connecté à plusieurs réseaux d'accès et enregistré via ces réseaux auprès du serveur S-CSCF, celui-ci transmet également dans sa réponse les adresses de contact associées au terminal UE1 connues du coeur de réseau CN, à savoir ici, les adresses @UE1A_CN et @UE1B_CN, ainsi que les adresses IP correspondantes du terminal UE1 @UE1A_AN et @UE1B_AN sur les réseaux d'accès ANA et ANB, reçues des serveurs P-CSCFA et P-CSCFB lors des enregistrements du terminal UE1 via les réseaux d'accès ANA et ANB.

Sur réception de la réponse du serveur S-CSCF, l'entité de raccordement P-CSCFB stocke, dans une base B2 de sa mémoire non volatile 5, pour le terminal UE1 (étape F80) :
- l'adresse de contact @UE1B_CN en relation avec l'adresse IP @UE1B_AN du terminal UE1 sur le réseau ANB ; et
- l'adresse de contact @UE1A_CN en relation avec l'adresse IP @UE1A_AN du terminal UE1 sur le réseau ANA.

Une fois enregistré auprès du coeur de réseau CN sur le réseau d'accès ANB, pour provoquer le basculement de la communication COM/ANA vers le réseau ANB, le terminal UE1 émet une requête Req de basculement sur le réseau ANB (étape F100). On suppose bien entendu qu'au préalable, le terminal UE1 a réservé sur le réseau ANB les ressources nécessaires pour établir la communication de façon connue en soi. Dans le mode de réalisation décrit ici, la requête Req est une requête d'établissement d'appel SIP INVITE contenant un entête prédéfini Handover traduisant la demande de basculement du terminal.

Bien entendu d'autres entêtes pourraient être introduits dans la requête SIP INVITE pour mettre en oeuvre l'invention. De façon connue, ces entêtes comme l'entête Handover proposé ici, devront faire l'objet d'une déclaration préalable auprès de l'IANA (Internet Assigned Number Authority) afin d'être conformes au protocole SIP.

En outre, dans l'exemple envisagé ici, la demande de basculement du terminal se traduit par la présence d'un entête prédéfini (à savoir l'entête Handover) dans la requête INVITE. En variante, cette demande de basculement du terminal pourrait se traduire par l'usage d'une nouvelle méthode SIP, introduite pour les besoins de l'invention. Conformément à l'invention, la requête Req de basculement comprend :
- un identifiant de la communication : il s'agit ici des identifiants DiagID_AN du dialogue établi pour la communication COM/ANA sur le réseau d'accès ANA entre le terminal UE1 et le serveur P-CSCFA ;
- des informations relatives à une session média SMB associée à la communication COM/ANB sur le réseau d'accès ANB : ces informations comprennent notamment les caractéristiques de la session média SMB (i.e. flux média tels que flux audio, vidéo, etc.) désirées par le terminal UE1 pour la communication COM après son basculement sur le réseau ANB ;
- le cas échéant, des informations relatives à la session média SMA associée à la communication COM/ANA ; et
- une information représentative d'au moins un traitement à appliquer sur la session média SMA ; ce traitement peut être notamment la libération partielle ou totale des ressources engagées pour la session SMA.

L'information représentative du traitement à appliquer sur la session SMA est contenue ici dans l'entête Handover de la requête. Dans le mode de réalisation décrit ici, l'entête Handover de la requête contient en outre l'adresse IP @UE1A_AN du terminal UE1 sur le réseau ANA.

Comme expliqué précédemment les informations relatives à la session média SMA viennent, le cas échéant, compléter l'information de traitement indiquée dans l'entête Handover de la requête, en décrivant par exemple les flux média spécifiques concernés par ce traitement. Ces informations seront présentes dans la requête de basculement notamment lorsque le traitement requis est une libération partielle des ressources.

En revanche, lorsque le traitement requis est une libération totale des ressources, on pourra s'abstenir de transmettre des informations complémentaires sur la session SMA.

L'**annexe 1** illustre un exemple de requête de basculement Req pouvant être envoyée par le terminal UE1 sur le réseau d'accès ANB, conformément à l'invention.

Dans cet exemple :
- les identifiants de dialogue DiagID_AN sont donnés par le contenu des champs « Call-Id », « To tag» et « From tag» ;
- les informations relatives à la session média SMB ainsi que, le cas échéant, à la session média SMA, sont contenues dans l'offre SDP (Session Description Protocol) « New_SDP_on_ANB » ; et
- l'adresse @UE1A_AN du terminal UE1 sur le réseau ANA et le traitement à appliquer sur la session média SMA sont indiqués dans l'entête Handover, dans les champs « contact » et « trt » respectivement. Ainsi, le traitement requis par le terminal UE1 correspond ici à la libération totale des ressources média engagées pour la session SMA.

La requête Req est émise par le terminal UE1 sur le réseau d'accès ANB (étape F100) : elle est portée par un signal radio émis via les moyens de communication 11-B du terminal UE1. Ce signal radio constitue un signal conforme à l'invention.

La requête Req est reçue par l'entité de raccordement P-CSCFB, point d'entrée du terminal UE1 sur le coeur de réseau CN via le réseau d'accès ANB. Celui-ci détecte, dans la requête Req reçue, la présence de l'entête Handover relatif à une demande de basculement (étape F110). Cet entête indique à l'entité de raccordement P-CSCFB qu'elle doit contacter l'entité de raccordement par laquelle transite la communication COM/ANA (c'est-à-dire ici l'entité P-CSCFA) pour lui indiquer le ou les traitements à appliquer sur la session média SMA.

A cette fin, l'entité de raccordement P-CSCFB identifie dans un premier temps l'entité de raccordement par laquelle transite la communication COM/ANA.

Pour cela, elle extrait l'adresse @UE1A_AN du terminal UE1 compris dans l'entête Handover de la requête et interroge la base B2 à l'aide de cette adresse. Elle obtient ainsi l'adresse de contact @UE1A_CN du terminal UE1 qui est stockée dans B2 en relation avec l'adresse @UE1A_AN.

Comme mentionné précédemment, l'adresse de contact @UE1A_CN est constituée de l'adresse IP @PA_CN de l'entité de raccordement P-CSCFA sur le coeur de réseau CN enrichie d'une information contextuelle liée au terminal UE1 (ou plus généralement à l'abonné du terminal UE1). L'entité de raccordement P-CSCFB peut donc extraire aisément, selon des moyens connus de l'homme du métier, l'adresse IP @PA_CN de l'entité de raccordement P-CSCFA de l'adresse de contact @UE1A_CN.

Puis l'entité de raccordement P-CSCFB envoie à l'entité de raccordement P-CSCFA ainsi identifiée, sur l'adresse @PA_CN obtenue, l'identifiant DiagID_AN de la communication reçu du terminal, ainsi que l'information représentative du ou des traitements à appliquer sur la session média SMA (étape F120) et, le cas échéant, les informations relatives à la session média SMA.

Pour ce faire, elle transfère à l'entité de raccordement P-CSCFA la requête de basculement Req reçue du terminal sous forme modifiée Req'. Un dialogue est ainsi établi entre les entités P-CSCFA et P-CSCFB.

L'**annexe 2** illustre un exemple de requête de basculement Req' transférée par le serveur P-CSCFB au serveur P-CSCFA, suite à la réception de la requête de basculement Req décrite en annexe 1.

On notera notamment, parmi les modifications apportées à la requête Req, la mise à jour du destinataire de la requête (en ligne 16 après INVITE) de l'entête Handover.

En outre, le champ « Call-Id » contient, dans la requête Req', l'identifiant de la communication DiagID_AN enrichi ici d'un préfixe « handover » destiné à informer l'entité de raccordement P-CSCFA que la communication identifiée dans le champ « Call-Id » correspond à un dialogue en cours autre que le dialogue établi avec l'entité de raccordement P-CSCFB.

Par ailleurs, dans l'exemple de l'annexe 2, l'offre SDP « New_SDP_on_ANB » est transmise à l'entité de raccordement P-CSCFA telle que reçue dans la requête de basculement, autrement dit, avec les informations relatives à la session SMB et le cas échéant, les informations relatives à la session SMA. L'entité de raccordement P-CSCFA est bien entendu apte à extraire de cette offre SDP les informations de session relatives à la session SMA.

En variante, si l'offre SDP contenue dans la requête de basculement reçue du terminal contient des informations relatives à la session SMA, seules ces informations pourraient être transmises dans la requête Req' à l'entité de raccordement P-CSCFA, par exemple dans une nouvelle offre SDP.

Dans le mode de réalisation décrit ici, l'entité de raccordement P-CSCFA par laquelle transite la communication à basculer est identifiée par l'entité de raccordement P-CSCFB à l'aide de l'adresse IP du terminal sur le réseau d'accès ANA compris dans l'entête Handover de la requête de basculement et d'une table de correspondance entre les adresses de contact du terminal et ses adresses IP sur les réseaux d'accès établie dynamiquement par l'entité P-CSCFB lors de l'enregistrement du terminal auprès du coeur de réseau (cf. étape F80).

En variante, dans un autre mode de réalisation de l'invention, le terminal UE1 transmet dans l'entête Handover de la requête de basculement un identifiant sur le réseau d'accès ANA de l'entité de raccordement P-CSCFA par laquelle transite la communication à basculer (ex. en référence à l'annexe 2, cet identifiant est compris dans le champ « dest » de l'entête Handover). En outre, dans ce mode de réalisation, l'entité de raccordement dispose, dans sa mémoire B2, d'une table statique établissant, pour chaque entité de raccordement au coeur de réseau CN, la correspondance entre un identifiant de cette entité sur le réseau d'accès qu'elle raccorde au coeur de réseau et un identifiant de cette entité sur le coeur de réseau. La consultation de cette table à l'aide de l'identifiant compris dans la requête de basculement permet à l'entité P-CSCFB d'identifier l'entité P-CSCFA sur le coeur de réseau afin de lui transmettre la requête Req'.

Sur réception de la requête Req', l'entité de raccordement P-CSCFA analyse le contenu de l'entête Handover et met en oeuvre le ou les traitements à appliquer sur la session SMA décrit dans l'entête, par exemple ici la libération totale des ressources média engagées pour la session SMA sur le réseau ANA (étape F130).

On notera que d'autres traitements que ceux spécifiés explicitement dans la requête Req' peuvent également être mis en oeuvre par l'entité de raccordement P-CSCFA, comme notamment l'arrêt des procédures latentes relatives à la session SMA (ex. procédures de libération de la session sur détection d'inactivité média). Ces traitements découlent en effet implicitement de la libération totale ou partielle des ressources requise dans la requête Req'.

Comme décrit précédemment, le cas échéant, la requête Req' peut également contenir des informations complémentaires sur les flux média concernés par le ou les traitements à appliquer à la session SMA (notamment lorsqu'un basculement partiel de la session est requis).

L'entité de raccordement P-CSCFA informe l'entité de raccordement P-CSCFB de l'application des traitements requis par le terminal sur la session SMA, par exemple dans l'entête Handover d'un message de réponse à la requête Req' (étape F140). En variante, le ou les traitements spécifiés dans l'entête Handover peuvent être appliqués sur la session SMA par l'entité de raccordement P-CSCFA après réception d'un message de confirmation du basculement de la communication sur le réseau ANB reçu de l'entité de raccordement P-CSCFB.

L'**annexe 3** illustre un exemple de message de réponse à la requête Req' illustrée en annexe 2, envoyé par le serveur P-CSCFA au serveur P-CSCFB après application du ou des traitements requis. Ce message de réponse indique, dans son entête Handover, que la libération des ressources a été réalisée par le serveur P-CSCFA (« trt=release_done »).

Dans le mode de réalisation décrit ici, le message de réponse comprend en outre, dans l'entête Handover, des informations contextuelles relatives à la communication COM/ANA établie dans le réseau ANA par le terminal UE1.

De manière générale, on entend par informations contextuelles tout type d'informations relatives à l'établissement de la communication sur le réseau ANA, qui sont stockées sur le serveur P-CSCFA en association avec un identifiant de la communication (par exemple ici avec l'identifiant DiagID_AN).

Dans l'exemple envisagé ici, les informations contextuelles insérées par le serveur P-CSCFA et obtenues à l'aide de l'identifiant DiagID_AN reçu dans la requête Req', comprennent avantageusement les identifiants de dialogue DiagID_CN de la communication sur le coeur de réseau CN et l'ensemble des entités (routeset) à traverser dans le coeur de réseau CN.

En effet, dans le mode de réalisation décrit ici, les serveurs P-CSCF du coeur de réseau CN étant configurés en mode « back-to-back user agent », l'identifiant de la communication DiagID_AN fourni par le terminal dans la requête Req est différent de l'identifiant DiagID_CN utilisé dans le coeur de réseau CN. La correspondance entre ces identifiants est toutefois connue de l'entité de raccordement P-CSCFA, et stockée dans la base B1 comme décrit précédemment. L'envoi de l'identifiant DiagID_CN à l'entité de raccordement P-CSCFB permet d'établir une continuité de la communication COM lors de son transfert sur le réseau ANB, comme décrit ultérieurement.

Dans un autre mode de réalisation dans lequel les serveurs P-CSCF du coeur de réseau CN sont configurés en mode proxy, l'identifiant de la communication DiagID_AN fourni par le terminal dans la requête Req est identique à l'identifiant DiagID_CN utilisé dans le coeur de réseau CN. Le serveur P-CSCFB peut alors obtenir l'identifiant de la communication utilisé dans le coeur de réseau directement dans la requête Req sans consulter le serveur P-CSCFA.

Dans l'exemple illustré en annexe 3, les informations contextuelles transmises par P-CSCFA à P-CSCFB sont comprises dans les champs « Call-Id », « localtag », « remotetag », « target » et « routeset » de l'entête Handover.

En variante, il est possible d'insérer d'autres informations contextuelles dans le message de réponse de l'entité de raccordement P-CSCFA en plus des identifiants de dialogue DiagID_CN et du routeset, telles que par exemple d'autres informations définies dans l'état de dialogue ou « dialogue state » décrit dans le document IETF RFC3261, ou des informations relatives au contexte d'enregistrement de l'utilisateur sur le serveur P-CSCF1, aux contextes de souscription en cours, etc.

Sur réception du message de réponse envoyé par l'entité P-CSCFA, l'entité de raccordement P-CSCFB met à jour la requête de basculement Req reçue du terminal UE1 (étape F150).

Plus précisément, elle supprime l'entête Handover de la requête et insère les informations contextuelles reçues dans le message de réponse. Ces informations contextuelles relatives au dialogue côté coeur de réseau sont insérées le cas échéant en remplacement des informations correspondantes côté réseau d'accès : ainsi, les identifiants de dialogue DiagID_CN viennent se substituer aux identifiants de dialogue DiagID_AN contenus dans la requête Req. Les informations de session restent inchangées.

La nouvelle requête ainsi modifiée, notée Req", est transmise à destination du serveur d'application TAS (étape F160).

On notera que la requête Req" se confond, au champ de contact près, avec une requête de « ré-invitation » qui serait émise par le serveur P-CSCFA à destination du serveur d'application TAS, puisqu'elle contient les informations contextuelles relatives à la communication COM/ANA stockées sur le serveur P-CSCFA. On s'assure ainsi de la continuité de la communication COM lors de son basculement sur le réseau ANB.

L'**annexe 4** illustre un exemple de requête modifiée Req" obtenue après mise à jour par le serveur P-CSCFB de la requête Req illustrée à l'annexe 1. Comme mentionné, cette requête ne comporte plus d'entête Handover. En outre, elle contient les identifiants de dialogue associés à la communication en cours sur le coeur de réseau IP (contenus dans les champs « To tag », « From tag » et « Call-Id »), le routeset (« E1;E2;E3 »), et les informations de session transmises par le terminal UE1 dans la requête Req (offre SDP « New_SDP_On_ANB »).

La requête de ré-invitation Req" est reçue par le serveur S-CSCF qui la route ici vers le serveur d'application TAS. Le traitement de cette requête (et notamment la création de la session média SMB) se poursuit alors comme une renégociation classique des paramètres d'une communication en cours dans le coeur de réseau CN (étapes F170-F190). Ce traitement étant connu en soi, il ne sera pas détaillé davantage ici. Le basculement de la communication COM sur le réseau ANB est achevé à l'issue de ce traitement (étape F200).

On notera que le basculement de la signalisation associée à la communication COM sur le réseau ANB est effectif dès l'envoi de la requête Req par le terminal UE1. L'invention permet avantageusement de basculer totalement la signalisation associée à la communication COM sur le réseau ANB : elle ne requiert en effet aucun échange de signalisation sur le réseau ANA entre le terminal UE1 et les entités du coeur de réseau pour le basculement de la communication COM et notamment la libération des ressources engagées pour la session SMA.

Dans le mode de réalisation décrit ici, on a envisagé l'établissement d'un canal de dialogue « logique » entre les deux entités P-CSCFA et P-CSCFB pour mettre en oeuvre l'invention. Ce canal logique est éphémère, dans le sens où il est créé appel par appel, lors d'une requête explicite de basculement émise par le terminal.

En variante, l'invention peut s'appuyer sur un canal physique, établi de façon permanente par construction réseau entre les deux entités de raccordement, ou plus généralement entre les diverses entités de raccordement du réseau mettant en oeuvre l'invention. Les requêtes de basculement émises par les terminaux utiliseraient alors ces canaux pré-établis pour véhiculer les informations relatives au basculement via une signalisation appropriée. Dans le cas du protocole SIP, l'invention pourrait notamment utiliser les méthodes SUBSCRIBE pour la création des canaux permanents entre les entités de raccordement, et NOTIFY ou INFO pour véhiculer les requêtes de basculement et les informations relatives au basculement sur ces canaux.

En outre, dans le mode de réalisation décrit ici, les entités de raccordement mettant en oeuvre le procédé de traitement selon l'invention sont des serveurs P-CSCF du coeur de réseau IP. En variante, l'invention s'applique également à d'autres entités de raccordement contrôlant (directement ou indirectement via des demandes explicites) le plan média et le plan de signalisation du réseau. Ainsi, l'invention s'applique également lorsque l'architecture du coeur de réseau IP s'appuie sur des éléments de sécurité comme des serveurs SBC. Dans ce mode de réalisation, le procédé de traitement selon l'invention est mis en oeuvre par les serveurs SBC.

**Annexe 1**

| | |
|---|---|
| INVITE DiagID_AN remote_target_TAS SIP/2.0 | |
| | To: <sip:UEdé@same_or_other_operator.ims.com>;tag=DiagID_AN_rem |
| | From: <sip:UE_SC@operator.ims.com>;tag=DiagID_AN_loc |
| | Call-Id: DiagID_AN |
| | CSeq: 43 INVITE |
| | Contact: @UE1B_AN |
| | Handover: contact=@UE1A_AN;dest=@PA_AN;trt=release |
| | |
| | [...] |
| | New_SDP_on_ANB |

**Annexe 2**

| | |
|---|---|
| INVITE @PA_CN SIP/2.0 | |
| | To: <sip:UEdé@same_or_other_operator.ims.com>;tag=DiagID_AN_rem |
| | From: <sip:UE_SC@operator.ims.com>;;tag=DiagID_AN_loc |
| | Call-Id: handover_DiagID_AN |
| | CSeq: 43 INVITE |
| | Contact: @PB_CN |
| | Handover: contact=@UE1A_AN;trt=release |
| | |
| | [...] |
| | New_SDP_on_ANB |

**Annexe 3**

| | |
|---|---|
| SIP/2.0 333 Handover done | |
| | To: <sip:UEdé@same_or_other_operator.ims.com>;tag= DiagID_AN_rem |
| | From: <sip:UE_SC@operator.ims.com>;tag= DiagID_AN_loc |
| | Call-Id: handover_DiagID_AN |
| | CSeq: 43 INVITE |
| | Contact: @PA_CN |
| | Handover:trt=release_done;Call_Id=DiagID_CN;localtag=DiagID_CN_loc; remotetag=DiagID_CN_rem;target=DiagID_CN_remote_target;routeset=E1;E2;E3 |
| | |
| | [...] |
| | New_SDP_on_ANB |

**Annexe 4**

| | |
|---|---|
| INVITE DiagID_CN_remote_target SIP/2.0 | |
| | To: <sip:UEdé@same_or_other_operator.ims.com>;tag= DiagID_CN_rem |
| | From: <sip:UE_SC@operator.ims.com>;tag= DiagID_CN_loc |
| | Call-Id: DiagID_CN |
| | CSeq: 43 INVITE |
| | Contact: @PB_CN |
| | Route: E1;E2;E3 |
| | |
| | [...] |
| | New_SDP_on_ANB |

## Revendications

1. Procédé de traitement d'une requête mis en oeuvre par une première entité (P-CSCFB) de raccordement d'un premier réseau d'accès (ANB) à un coeur de réseau (CN), comportant :
- une étape de réception (F100) d'une requête (Req) de basculement vers le premier réseau d'accès (ANB) d'une communication établie par un terminal (UE1) sur un deuxième réseau d'accès (ANA), cette requête étant reçue du terminal sur le premier réseau d'accès (ANB) et comprenant :
o un identifiant de la communication (DiagID_AN) ;
o des informations relatives à une session média associée à la communication sur le premier réseau d'accès (ANB) ; et
o une information représentative d'au moins un traitement à appliquer sur une session média associée à la communication sur le deuxième réseau d'accès (ANA) ;
- une étape d'identification (F110), à partir de la requête de basculement (Req), d'une deuxième entité de raccordement (P-CSCFA) du deuxième réseau d'accès au coeur de réseau par laquelle transite la communication établie sur le deuxième réseau d'accès ;
- une étape de transmission (F120) de l'identifiant de la communication (DiagID_AN) et de l'information représentative dudit au moins un traitement à la deuxième entité (P-CSCFA) ainsi identifiée pour application dudit au moins un traitement ; et
- une étape de transfert (F160), à destination du coeur de réseau, de la requête de basculement (Req") avec les informations relatives à la session média et un identifiant de la communication (DiagID_CN) dans le coeur de réseau obtenu à l'aide de l'identifiant de la communication (DiagID_AN) reçu du terminal.

2. Procédé de traitement d'une requête (Req) selon la revendication 1 dans lequel la requête (Req) de basculement reçue du terminal comprend en outre des informations relatives à la session média associée à la communication sur le deuxième réseau d'accès (ANA), ces informations étant au moins partiellement transmises avec l'identifiant de la communication (DiagID_AN) et l'information représentative dudit au moins un traitement à la deuxième entité (P-CSCFA).

3. Procédé de traitement d'une requête (Req) selon la revendication 1 dans lequel l'identifiant de la communication (DiagID_CN) dans le coeur de réseau est obtenu (F120, F140) auprès de la deuxième entité (P-CSCFA).

4. Procédé de traitement d'une requête (Req) selon la revendication 3 comportant en outre :
- une étape d'obtention (F120, F140), auprès de la deuxième entité (P-CSCFA) et à l'aide de l'identifiant de la communication (DiagID_AN) reçu du terminal, d'informations contextuelles relatives à la communication contenant l'identifiant de la communication (DiagID_CN) dans le coeur de réseau ; et
- une étape d'insertion (F150) desdites informations contextuelles dans la requête de basculement (Req") avant son transfert à destination du coeur de réseau.

5. Procédé de traitement d'une requête selon la revendication 1 dans lequel au cours de l'étape d'identification (F110), la deuxième entité de raccordement (PCSCFA) est identifiée à l'aide d'un identifiant (@UE1A_AN) du terminal (UE1) sur le deuxième réseau d'accès (ANA) compris dans la requête de basculement (Req).

6. Procédé de traitement d'une requête (Req) selon la revendication 1 dans lequel :
- le coeur de réseau (CN) est un réseau IP mettant en oeuvre le protocole SIP ;
- la requête de basculement (Req) reçue du terminal est une requête d'établissement d'appel INVITE ; et
- l'information représentative dudit au moins un traitement est contenue dans un entête prédéfini de la requête de basculement (Req) reçue du terminal.

7. Procédé de traitement d'une requête selon les revendications 5 et 6 dans lequel l'entête prédéfini de la requête de basculement contient en outre l'identifiant du terminal sur le deuxième réseau d'accès.

8. Procédé de traitement d'une requête (Req) selon la revendication 4 dans lequel l'identifiant de la communication (DiagID_AN) et l'information représentative dudit au moins un traitement sont transmises via un canal physique préétabli entre la première entité (P-CSCFB) et la deuxième entité (P-CSCFA), les informations contextuelles (DiagID_CN) étant obtenues via ce canal.

9. Procédé de traitement d'une session média comportant :
- une étape de réception (F120) d'une requête (Req') en provenance d'une première entité de raccordement (P-CSCFB) d'un premier réseau d'accès (ANB) à un coeur de réseau (CN), ladite première entité de raccordement étant en charge du basculement vers le premier réseau d'accès d'une communication établie par un terminal (UE1) sur un deuxième réseau d'accès (ANA), ladite requête comprenant :
o un identifiant de la communication (DiagID_AN) ; et
o une information représentative d'au moins un traitement à appliquer sur une session média relative à cette communication ; et
- une étape d'application (F130) dudit au moins un traitement sur la session média,
ledit procédé de traitement étant mis en oeuvre par une deuxième entité (P-CSCFA) de raccordement du deuxième réseau d'accès (ANA) au coeur de réseau, par laquelle transite ladite communication.

10. Procédé d'émission (F100) d'une requête (Req) par un terminal (UE1) sur un premier réseau d'accès (ANB) connecté à un coeur de réseau (CN) par l'intermédiaire d'une première entité de raccordement (P-CSCFB), ladite requête étant une requête de basculement vers le premier réseau d'accès d'une communication établie par le terminal sur un deuxième réseau d'accès (ANA), ladite communication transitant par une deuxième entité de raccordement (P-CSCFA) du deuxième réseau d'accès au coeur de réseau, ledit procédé étant **caractérisé en ce que** la requête de basculement peut être traitée par ladite première entité de raccordement et comprend :
- un identifiant de la communication (DiagID_AN) ;
- des informations relatives à une session média associée à la communication sur le premier réseau d'accès (ANB) ; et
- une information représentative d'au moins un traitement à appliquer par ladite deuxième entité de raccordement sur une session média associée à la communication sur le deuxième réseau d'accès (ANA).

11. Entité de raccordement (P-CSCFB) d'un premier réseau d'accès (ANB) à un coeur de réseau (CN) comportant :
- des moyens de réception (6-B) d'une requête de basculement (Req) vers le premier réseau d'accès (ANB) d'une communication établie par un terminal (UE1) sur un deuxième réseau d'accès (ANA), cette requête étant reçue du terminal sur le premier réseau d'accès (ANB) et comprenant :
o un identifiant de la communication (DiagID_AN) ;
o des informations relatives à une session média associée à la communication sur le premier réseau d'accès (ANB) ; et
o une information représentative d'au moins un traitement à appliquer sur une session média associée à la communication sur le deuxième réseau d'accès (ANA) ;
- des moyens d'identification, à partir de la requête de basculement (Req), d'une deuxième entité de raccordement (P-CSCFA) du deuxième réseau d'accès au coeur de réseau par laquelle transite la communication établie sur le deuxième réseau d'accès ;
- des moyens de transmission (7) de l'identifiant de la communication (DiagID_AN) et de l'information représentative dudit au moins un traitement à la deuxième entité ainsi identifiée pour application dudit au moins un traitement ; et
- des moyens de transfert (7), à destination du coeur de réseau, de la requête de basculement (Req") avec les informations relatives à la session média et un identifiant de la communication (DiagID_CN) dans le coeur de réseau obtenu à l'aide de l'identifiant de la communication (DiagID_AN) reçu du terminal.

12. Entité de raccordement selon la revendication 11 **caractérisée en ce qu'**elle comporte des moyens d'obtention dudit identifiant de la communication (DiagID_CN) dans le coeur de réseau auprès de la deuxième entité (P-CSCFA).

13. Entité (P-CSCFA) comportant :
- des moyens de réception (7) d'une requête (Req') en provenance d'une première entité de raccordement (P-CSCFB) d'un premier réseau d'accès (ANB) à un coeur de réseau (CN), ladite première entité étant en charge du basculement vers le premier réseau d'accès d'une communication établie par un terminal (UE1) sur un deuxième réseau d'accès (ANA), ladite requête comprenant :
o un identifiant de la communication (DiagID_AN) ; et
o une information représentative d'au moins un traitement à appliquer sur une session média relative à cette communication ; et
- des moyens d'application dudit au moins un traitement sur la session média,
ladite entité étant une entité de raccordement du deuxième réseau d'accès (ANA) au coeur de réseau par laquelle transite ladite communication.

14. Terminal multi-mode (UE1), apte à communiquer sur un premier (ANB) et un deuxième (ANA) réseau d'accès, ledit premier réseau d'accès étant connecté à un coeur de réseau (CN) par l'intermédiaire d'une première entité de raccordement, et ledit deuxième réseau d'accès étant connecté audit coeur de réseau par l'intermédiaire d'une deuxième entité de raccordement, ledit terminal comprenant :
- des moyens d'établissement d'une communication (11-A) sur le deuxième réseau d'accès, ladite communication transitant par ladite deuxième entité de raccordement ; et
- des moyens d'émission (11-B), sur le premier réseau d'accès, d'une requête (Req) de basculement de ladite communication vers le premier réseau d'accès, cette requête de basculement pouvant être traitée par la première entité de raccordement et comprenant :
o un identifiant de la communication (DiagID_AN) ;
o des informations relatives à une session média associée à la communication sur le premier réseau d'accès (ANB) ; et
o une information représentative d'au moins un traitement à appliquer par ladite deuxième entité de raccordement sur une session média associée à la communication sur le deuxième réseau d'accès (ANA).

15. Système de communications (1) comprenant :
- un terminal multi-mode selon la revendication 14, apte à communiquer sur un premier réseau d'accès (ANB) et sur un deuxième réseau d'accès (ANA), et à émettre une requête de basculement (Req) vers le premier réseau d'accès d'une communication établie sur le deuxième réseau d'accès ;
- une première entité de raccordement (P-CSCFB) du premier réseau d'accès à un coeur de réseau (CN), selon la revendication 11 ou 12 et apte à traiter ladite requête de basculement ; et
- une deuxième entité de raccordement (P-CSCFA) du deuxième réseau d'accès au coeur de réseau selon la revendication 13, par laquelle transite ladite communication sur le deuxième réseau d'accès, et apte à appliquer au moins un traitement sur une session média associée à cette communication.

16. Programme d'ordinateur comportant des instructions pour l'exécution des étapes du procédé de traitement d'une requête selon l'une quelconque des revendications 1 à 8, ou pour l'exécution des étapes du procédé de traitement d'une session média selon la revendication 9 ou pour l'exécution des étapes du procédé d'émission d'une requête selon la revendication 10 lorsque ledit programme est exécuté par un ordinateur.

17. Support d'informations lisible par un ordinateur sur lequel est stocké un programme d'ordinateur selon la revendication 16.

## Patentansprüche

1. Verfahren zur Verarbeitung einer Anforderung, die von einer ersten Entität (P-CSCFB) für den Anschluss eines ersten Zugangsnetzes (ANB) an ein Kernnetz (CN) getätigt wird, umfassend:
- einen Schritt des Empfangens (F100) einer Anforderung (Req) zum Umschalten einer Kommunikation, die von einem Endgerät (UE1) in einem zweiten Zugangsnetz (ANA) eingerichtet wurde, zu dem ersten Zugangsnetz (ANB), wobei diese Anforderung von dem Endgerät in dem ersten Zugangsnetz (ANB) empfangen wird und umfasst:
∘ eine Kennung der Kommunikation (DiagID_AN) ;
∘ Informationen, die eine Mediensitzung betreffen, die der Kommunikation in dem ersten Zugangsnetz (ANB) zugeordnet ist; und
∘ eine Information, die für wenigstens eine Verarbeitung repräsentativ ist, die auf eine Mediensitzung anzuwenden ist, die der Kommunikation in dem zweiten Zugangsnetz (ANA) zugeordnet ist;
- einen Schritt der Identifizierung (F110), ausgehend von der Umschaltanforderung (Req), einer zweiten Entität für den Anschluss (P-CSCFA) des zweiten Zugangsnetzes an das Kernnetz, über welche die in dem zweiten Zugangsnetz eingerichtete Kommunikation verläuft;
- einen Schritt des Sendens (F120) der Kennung der Kommunikation (DiagID_AN) und der Information, die für die wenigstens eine Verarbeitung repräsentativ ist, an die so identifizierte zweite Entität (P-CSCFA) zur Anwendung der wenigstens einen Verarbeitung; und
- einen Schritt der Übertragung (F160), an das Kernnetz, der Umschaltanforderung (Req") mit den Informationen, welche die Mediensitzung betreffen, und einer Kennung der Kommunikation (DiagID_CN) in dem Kernnetz, die mithilfe der von dem Endgerät empfangenen Kennung der Kommunikation (DiagID_AN) erhalten wurde.

2. Verfahren zur Verarbeitung einer Anforderung (Req) nach Anspruch 1, wobei die von dem Endgerät empfangene Anforderung (Req) zum Umschalten außerdem Informationen umfasst, welche die Mediensitzung betreffen, die der Kommunikation in dem zweiten Zugangsnetz (ANA) zugeordnet ist, wobei diese Informationen wenigstens teilweise mit der Kennung der Kommunikation (DiagID_AN) und der Information, die für die wenigstens eine Verarbeitung repräsentativ ist, an die zweite Entität (P-CSCFA) gesendet werden.

3. Verfahren zur Verarbeitung einer Anforderung (Req) nach Anspruch 1, wobei die Kennung der Kommunikation (DiagID_CN) in dem Kernnetz von der zweiten Entität (P-CSCFA) bezogen wird (F120, F140).

4. Verfahren zur Verarbeitung einer Anforderung (Req) nach Anspruch 3, welches außerdem umfasst:
- einen Schritt des Beziehens (F120, F140), von der zweiten Entität (P-CSCFA) und mithilfe der von dem Endgerät empfangenen Kennung der Kommunikation (DiagID_AN), von die Kommunikation betreffenden Kontextinformationen, welche die Kennung der Kommunikation (DiagID_CN) in dem Kernnetz enthalten; und
- einen Schritt des Einfügens (F150) dieser Kontextinformationen in die Umschaltanforderung (Req") vor ihrer Übertragung an das Kernnetz.

5. Verfahren zur Verarbeitung einer Anforderung nach Anspruch 1, wobei im Verlaufe des Schrittes der Identifizierung (F110) die zweite Entität für den Anschluss (PCSCFA) mithilfe einer Kennung (@UE1A_AN) des Endgerätes (UE1) in dem zweiten Zugangsnetz (ANA) identifiziert wird, die in der Umschaltanforderung (Req) enthalten ist.

6. Verfahren zur Verarbeitung einer Anforderung (Req) nach Anspruch 1, wobei:
- das Kernnetz (CN) ein IP-Netz ist, welches das SIP-Protokoll verwendet;
- die von dem Endgerät empfangene Umschaltanforderung (Req) eine Anforderung zum Verbindungsaufbau INVITE ist; und
- die Information, die für die wenigstens eine Verarbeitung repräsentativ ist, in einem vordefinierten Kopf der von dem Endgerät empfangenen Umschaltanforderung (Req) enthalten ist.

7. Verfahren zur Verarbeitung einer Anforderung nach den Ansprüchen 5 und 6, wobei der vordefinierte Kopf der Umschaltanforderung außerdem die Kennung des Endgerätes in dem zweiten Zugangsnetz enthält.

8. Verfahren zur Verarbeitung einer Anforderung (Req) nach Anspruch 4, wobei die Kennung der Kommunikation (DiagID_AN) und die Information, die für die wenigstens eine Verarbeitung repräsentativ ist, über einen physischen Kanal gesendet werden, der zuvor zwischen der ersten Entität (P-CSCFB) und der zweiten Entität (P-CSCFA) eingerichtet wurde, wobei die Kontextinformationen (DiagID_CN) über diesen Kanal bezogen werden.

9. Verfahren zur Verarbeitung einer Mediensitzung, umfassend:
- einen Schritt des Empfangens (F120) einer Anforderung (Req'), die von einer ersten Entität für den Anschluss (P-CSCFB) eines ersten Zugangsnetzes (ANB) an ein Kernnetz (CN) stammt, wobei die erste Entität für den Anschluss die Aufgabe hat, die Umschaltung einer Kommunikation, die von einem Endgerät (UE1) in einem zweiten Zugangsnetz (ANA) eingerichtet wurde, zu dem ersten Zugangsnetz durchzuführen, wobei die Anforderung umfasst:
∘ eine Kennung der Kommunikation (DiagID_AN); und
∘ eine Information, die für wenigstens eine Verarbeitung repräsentativ ist, die auf eine Mediensitzung anzuwenden ist, die diese Kommunikation betrifft; und
- einen Schritt der Anwendung (F130) der wenigstens einen Verarbeitung auf die Mediensitzung,
wobei das Verfahren zur Verarbeitung von einer zweiten Entität für den Anschluss (P-CSCFA) des zweiten Zugangsnetzes (ANA) an das Kernnetz durchgeführt wird, über welche die Kommunikation verläuft.

10. Verfahren zum Senden (F100) einer Anforderung (Req) durch ein Endgerät (UE1) in einem ersten Zugangsnetz (ANB), das über eine erste Anschluss-Entität (P-CSCFB) mit einem Kernnetz (CN) verbunden ist, wobei diese Anforderung eine Anforderung zum Umschalten einer Kommunikation, die von dem Endgerät in einem zweiten Zugangsnetz (ANA) eingerichtet wurde, zu dem ersten Zugangsnetz ist, wobei diese Kommunikation über eine zweite Entität für den Anschluss (P-CSCFA) des zweiten Zugangsnetzes an das Kernnetz verläuft, wobei das Verfahren **dadurch gekennzeichnet ist, dass** die Umschaltanforderung von der ersten Anschluss-Entität verarbeitet werden kann und umfasst:
- eine Kennung der Kommunikation (DiagID_AN);
- Informationen, die eine Mediensitzung betreffen, die der Kommunikation in dem ersten Zugangsnetz (ANB) zugeordnet ist; und
- eine Information, die für wenigstens eine Verarbeitung repräsentativ ist, die von der zweiten Anschluss-Entität auf eine Mediensitzung anzuwenden ist, die der Kommunikation in dem zweiten Zugangsnetz (ANA) zugeordnet ist.

11. Entität für den Anschluss (P-CSCFB) eines ersten Zugangsnetzes (ANB) an ein Kernnetz (CN), umfassend:
- Mittel zum Empfangen (6-B) einer Anforderung zum Umschalten (Req) einer Kommunikation, die von einem Endgerät (UE1) in einem zweiten Zugangsnetz (ANA) eingerichtet wurde, zu dem ersten Zugangsnetz (ANB), wobei diese Anforderung von dem Endgerät in dem ersten Zugangsnetz (ANB) empfangen wird und umfasst:
∘ eine Kennung der Kommunikation (DiagID_AN) ;
∘ Informationen, die eine Mediensitzung betreffen, die der Kommunikation in dem ersten Zugangsnetz (ANB) zugeordnet ist; und
∘ eine Information, die für wenigstens eine Verarbeitung repräsentativ ist, die auf eine Mediensitzung anzuwenden ist, die der Kommunikation in dem zweiten Zugangsnetz (ANA) zugeordnet ist;
- Mittel zur Identifizierung, ausgehend von der Umschaltanforderung (Req), einer zweiten Entität für den Anschluss (P-CSCFA) des zweiten Zugangsnetzes an das Kernnetz, über welche die in dem zweiten Zugangsnetz eingerichtete Kommunikation verläuft;
- Mittel zum Senden (7) der Kennung der Kommunikation (DiagID_AN) und der Information, die für die wenigstens eine Verarbeitung repräsentativ ist, an die so identifizierte zweite Entität zur Anwendung der wenigstens einen Verarbeitung; und
- Mittel zur Übertragung (7), an das Kernnetz, der Umschaltanforderung (Req") mit den Informationen, welche die Mediensitzung betreffen, und einer Kennung der Kommunikation (DiagID_CN) in dem Kernnetz, die mithilfe der von dem Endgerät empfangenen Kennung der Kommunikation (DiagID_AN) erhalten wurde.

12. Anschluss-Entität nach Anspruch 11, **dadurch gekennzeichnet, dass** sie Mittel zum Beziehen der Kennung der Kommunikation (DiagID_CN) in dem Kernnetz von der zweiten Entität (P-CSCFA) umfasst.

13. Entität (P-CSCFA), umfassend:
- Mittel zum Empfangen (7) einer Anforderung (Req'), die von einer ersten Entität für den Anschluss (P-CSCFB) eines ersten Zugangsnetzes (ANB) an ein Kernnetz (CN) stammt, wobei die erste Entität für den Anschluss die Aufgabe hat, die Umschaltung einer Kommunikation, die von einem Endgerät (UE1) in einem zweiten Zugangsnetz (ANA) eingerichtet wurde, zu dem ersten Zugangsnetz durchzuführen, wobei die Anforderung umfasst:
∘ eine Kennung der Kommunikation (DiagID_AN); und
∘ eine Information, die für wenigstens eine Verarbeitung repräsentativ ist, die auf eine Mediensitzung anzuwenden ist, die diese Kommunikation betrifft; und
- Mittel zur Anwendung der wenigstens einen Verarbeitung auf die Mediensitzung,
wobei die Entität eine Entität für den Anschluss des zweiten Zugangsnetzes (ANA) an das Kernnetz ist, über welche die Kommunikation verläuft.

14. Multimode-Endgerät (UE1), das geeignet ist, in einem ersten (ANB) und einem zweiten (ANA) Zugangsnetz zu kommunizieren, wobei das erste Zugangsnetz über eine erste Anschluss-Entität mit einem Kernnetz (CN) verbunden ist und das zweite Zugangsnetz über eine zweite Anschluss-Entität mit dem Kernnetz verbunden ist, wobei das Endgerät umfasst:
- Mittel zum Einrichten einer Kommunikation (11-A) in dem zweiten Zugangsnetz, wobei diese Kommunikation über die zweite Anschluss-Entität verläuft; und
- Mittel zum Senden (11-B), in dem ersten Zugangsnetz, einer Anforderung (Req) zum Umschalten der Kommunikation zu dem ersten Zugangsnetz, wobei diese Umschaltanforderung von der ersten Anschluss-Entität verarbeitet werden kann und umfasst:
∘ eine Kennung der Kommunikation (DiagID_AN);
∘ Informationen, die eine Mediensitzung betreffen, die der Kommunikation in dem ersten Zugangsnetz (ANB) zugeordnet ist; und
∘ eine Information, die für wenigstens eine Verarbeitung repräsentativ ist, die durch die zweite Anschluss-Entität auf eine Mediensitzung anzuwenden ist, die der Kommunikation in dem zweiten Zugangsnetz (ANA) zugeordnet ist.

15. Kommunikationssystem (1), umfassend:
- ein Multimode-Endgerät nach Anspruch 14, das geeignet ist, in einem ersten Zugangsnetz (ANB) und in einem zweiten Zugangsnetz (ANA) zu kommunizieren und eine Anforderung zum Umschalten (Req) einer Kommunikation, die in dem zweiten Zugangsnetz eingerichtet wurde, zu dem ersten Zugangsnetz zu senden;
- eine erste Entität für den Anschluss (P-CSCFB) des ersten Zugangsnetzes an ein Kernnetz (CN) nach Anspruch 11 oder 12, die geeignet ist, die Umschaltanforderung zu verarbeiten, und
- eine zweite Entität für den Anschluss (P-CSCFA) des zweiten Zugangsnetzes an das Kernnetz nach Anspruch 13, über welche die Kommunikation in dem zweiten Zugangsnetz verläuft und welche geeignet ist, wenigstens eine Verarbeitung auf eine Mediensitzung anzuwenden, die dieser Kommunikation zugeordnet ist.

16. Computerprogramm, welches Anweisungen zur Ausführung der Schritte des Verfahrens zur Verarbeitung einer Anforderung nach einem der Ansprüche 1 bis 8 umfasst, oder zur Ausführung der Schritte des Verfahrens zur Verarbeitung einer Mediensitzung nach Anspruch 9, oder zur Ausführung der Schritte des Verfahrens zum Senden einer Anforderung nach Anspruch 10, wenn das Programm von einem Computer ausgeführt wird.

17. Computerlesbarer Datenträger, auf welchem ein Computerprogramm nach Anspruch 16 gespeichert ist.

## Claims

1. Method for processing a request, carried out by a first entity (P-CSCFB) connecting a first access network (ANB) to a network core (CN), comprising:
- a step of receiving (F100) a request (Req) for switching a communication set up by a terminal (UE1) on a second access network (ANA) to the first access network (ANB), this request being received from the terminal on the first access network (ANB) and including:
o an identifier of the communication (DiagID_AN);
o information relating to a media session associated with the communication on the first access network (ANB); and
o information representing at least one processing to be applied to a media session associated with the communication on the second access network (ANA);
- a step of identifying (F110), on the basis of the switching request (Req), a second entity (P-CSCFA) connecting the second access network to the network core via which the communication set up on the second access network passes;
- a step of transmitting (F120) the identifier of the communication (DiagID_AN) and the information representing said at least one processing to the second entity (P-CSCFA) and identified for the application of said at least one processing; and
- a step of transferring (F160) the switching request (Req") to the network core with the information relating to the media session and an identifier of the communication (DiagID_CN) in the network core obtained by means of the identifier of the communication (DiagID_AN) received from the terminal.

2. Method for processing a request (Req) according to Claim 1, in which the switching request (Req) received from the terminal furthermore includes information relating to the media session associated with the communication on the second access network (ANA), this information being at least partially transmitted with the identifier of the communication (DiagID_AN) and the information representing said at least one processing to the second entity (P-CSCFA).

3. Method for processing a request (Req) according to Claim 1, in which the identifier of the communication (DiagID_CN) in the network core is obtained (F120, F140) from the second entity (P-CSCFA).

4. Method for processing a request (Req) according to Claim 3, furthermore including:
- a step of obtaining (F120, F140), from the second entity (P-CSCFA) and by means of the identifier of the communication (DiagID_AN) received from the terminal, context information relating to the communication containing the identifier of the communication (DiagID_CN) in the network core; and
- a step of inserting (F150) said context information into the switching request (Req") before its transfer to the network core.

5. Method for processing a request according to Claim 1, in which, during the identification step (F110), the second connection entity (P-CSCFA) is identified by means of an identifier (@UE1A_AN) of the terminal (UE1) on the second access network (ANA) included in the switching request (Req).

6. Method for processing a request (Req) according to Claim 1, in which:
- the network core (CN) is an IP network implementing the SIP protocol;
- the switching request (Req) received from the terminal is a call set-up request INVITE; and
- the information representing said at least one processing is contained in a predefined header of the switching request (Req) received from the terminal.

7. Method for processing a request according to Claims 5 and 6, in which the predefined header of the switching request furthermore contains the identifier of the terminal on the second access network.

8. Method for processing a request (Req) according to Claim 4, in which the identifier of the communication (DiagID_AN) and the information representing said at least one processing are transmitted via a physical channel previously set up between the first entity (P-CSCFB) and the second entity (P-CSCFA), the context information (DiagID_CN) being obtained via this channel.

9. Method for processing a media session, comprising:
- a step of receiving (F120) a request (Req') from a first entity (P-CSCFB) connecting a first access network (ANB) to a network core (CN), said first connection entity being responsible for switching a communication set up by a terminal (UE1) on a second access network (ANA) to the first access network, said request including:
∘ an identifier of the communication (DiagID_AN); and
o information representing at least one processing to be applied to a media session relating to this communication; and
- a step of applying (F130) said at least one processing to the media session,
said processing method being carried out by a second entity (P-CSCFA) connecting the second access network (ANA) to the network core via which said communication passes.

10. Method for the transmission (F100) of a request (Req) by a terminal (UE1) on a first access network (ANB) connected to a network core (CN) via a first connection entity (P-CSCFB), said request being a request for switching a communication set up by the terminal on a second access network (ANA) to the first access network, said communication passing via a second entity (P-CSCFA) connecting the second access network to the network core, said method being **characterized in that** the switching request can be processed by said first connection entity and includes:
- an identifier of the communication (DiagID_AN);
- information relating to a media session associated with the communication on the first access network (ANB); and
- information representing at least one processing to be applied by said second connection entity to a media session associated with the communication on the second access network (ANA).

11. Entity (P-CSCFB) connecting a first access network (ANB) to a network core (CN), comprising:
- means for receiving (6-B) a request (Req) for switching a communication set up by a terminal (UE1) on a second access network (ANA) to the first access network (ANB), this request being received from the terminal on the first access network (ANB) and including:
o an identifier of the communication (DiagID_AN);
o information relating to a media session associated with the communication on the first access network (ANB); and
o information representing at least one processing to be applied to a media session associated with the communication on the second access network (ANA);
- means for identifying, on the basis of the switching request (Req), a second entity (P-CSCFA) connecting the second access network to the network core via which the communication set up on the second access network passes;
- means for transmitting (7) the identifier of the communication (DiagID_AN) and the information representing said at least one processing to the second entity thus identified for the application of said at least one processing; and
- means for transferring (7) the switching request (Req") to the network core with the information relating to the media session and an identifier of the communication (DiagID_CN) in the network core obtained by means of the identifier of the communication (DiagID_AN) received from the terminal.

12. Connection entity according to Claim 11, **characterized in that** it comprises means for obtaining said identifier of the communication (DiagID_CN) in the network core from the second entity (P-CSCFA).

13. Entity (P-CSCFA) comprising:
- means for receiving (7) a request (Req') from a first entity (P-CSCFB) connecting a first access network (ANB) to a network core (CN), said first entity being responsible for switching a communication set up by a terminal (UE1) on a second access network (ANA) to the first access network, said request including:
o an identifier of the communication (DiagID_AN); and
o information representing at least one processing to be applied to a media session relating to this communication; and
- means for applying said at least one processing to the media session,
said entity being an entity connecting the second access network (ANA) to the network core via which said communication passes.

14. Multi-mode terminal (UE1), capable of communicating on a first (ANB) and a second (ANA) access network, said first access network being connected to a network core (CN) via a first connection entity, and said second access network being connected to said network core via a second connection entity, said terminal including:
- means for setting up a communication (11-A) on the second access network, said communication passing via said second connection entity; and
- means for transmitting (11-B), on the first access network, a request (Req) for switching said communication to the first access network, this switching request being capable of being processed by the first connection entity and including:
o an identifier of the communication (DiagID_AN);
o information relating to a media session associated with the communication on the first access network (ANB); and
o information representing at least one processing to be applied by said second connection entity to a media session associated with the communication on the second access network (ANA).

15. Communication system (1), including:
- a multi-mode terminal according to Claim 14, capable of communicating on a first access network (ANB) and on a second access network (ANA), and of transmitting a request (Req) for switching a communication set up on the second access network to the first access network;
- a first entity (P-CSCFB) connecting the first access network to a network core (CN), according to Claim 11 or 12, and capable of processing said switching request; and
- a second entity (P-CSCFA) connecting the second access network to the network core, according to Claim 13, via which said communication passes on the second access network, and capable of applying at least one processing to a media session associated with this communication.

16. Computer program comprising instructions for carrying out the steps of the method for processing a request according to any one of Claims 1 to 8, or for carrying out the steps of the method for processing a media session according to Claim 9 or for carrying out the steps of the method for transmitting a request according to Claim 10 when said program is executed by a computer.

17. Computer-readable information medium on which a computer program according to Claim 16 is stored.
